# EUROPÄISCHE PATENTSCHRIFT

(11) **EP 3 707 420 B1**
(45) Veröffentlichungstag und Bekanntmachung des Hinweises auf die Patenterteilung: **29.12.2021**
(21) Anmeldenummer: 18783386.8
(22) Anmeldetag: 25.09.2018
(51) Int. Cl.: F16L 37/23, F16L 37/34, F16L 37/36

(54) **KUPPLUNGSELEMENT FÜR EINE HYDRAULIKKUPPLUNG**
COUPLING ELEMENT FOR A HYDRAULIC COUPLING
ÉLÉMENT D'ACCOUPLEMENT POUR UN ACCOUPLEMENT HYDRAULIQUE

(30) Priorität: 10.11.2017 DE 102017126459
(43) Veröffentlichungstag der Anmeldung: 16.09.2020
(60) Teilanmeldung: 21184322.2
(73) Patentinhaber: U.M. Gewerbeimmobilien GmbH & Co. KG, 58791 Werdohl (DE)
(72) Erfinder: FIRUS, Artur, 58638 Iserlohn (DE); LAUFER, Klaus, 58540 Meinerzhagen (DE)
(74) Vertreter: Patentanwälte Dörner & Kötter PartG mbB
(86) Internationale Anmeldenummer: PCT/EP2018/076002
(87) Internationale Veröffentlichungsnummer: WO 2019/091658

(56) Entgegenhaltungen:
- EP-A1- 2 687 767
- EP-B1- 0 572 480
- DE-A1- 10 351 997
- DE-A1-102014 009 063
- DE-A1-102015 222 639
- US-B1- 6 776 187

## Beschreibung

Die Erfindung betrifft ein Kupplungselement für eine Hydraulikkupplung einer Druckmittelleitung, insbesondere eine Kupplungsmuffe zum Herstellen einer formschlüssigen Verbindung mit einem Kupplungsstecker. Das Kupplungselement weist mindestens ein Gehäuse, mindestens einen Muffeninnenkörper, mindestens eine Druckhülse und mindestens einen Ventilstößel auf. Das Gehäuse weist mindestens einen Strömungskanal für ein Druckmittel und eine Kupplungsachse auf. Zumindest der Muffeninnenkörper, die Druckhülse und der Ventilstößel sind innerhalb des Gehäuses entlang der Kupplungsachse verschiebbar gehalten.

Hydraulikkupplungen, nämlich eine Kombination aus Kupplungsmuffe und Kupplungsstecker, dienen dem Verbinden von zwei Abschnitten einer Druckmittelleitung und werden insbesondere dazu verwendet, hydraulische Geräte an eine Hydraulikquelle anzuschließen, beispielsweise zum Anschließen eines Werkzeugs an eine landwirtschaftliche Maschine oder eine Baumaschine.

Aus dem Stand der Technik sind sogenannte flachdichtende Kupplungsmuffen und Kupplungsstecker bekannt, die sich dadurch auszeichnen, dass im nicht verbundenen - nicht gekuppelten - Zustand durch die Bauteile des Kupplungssteckers oder der Kupplungsmuffe im Verbindungsschnittstellenbereich eine plane und geschlossene Fläche gebildet wird. Dadurch wird der Eintritt von Schmutz in das Gehäuse und zwischen die Bauteile verhindert sowie der Verlust von Druckmittel zuverlässig vermieden. Derartige flachdichtende Hydraulickupplungen eignen sich insbesondere für den Einsatz in schmutzigen und staubigen Umgebungen.

Das Einkuppeln einer Hydraulikkupplung, also das Herstellen einer formschlüssigen Verbindung zwischen einer Kupplungsmuffe und einem Kupplungsstecker, erfolgt üblicherweise dadurch, dass der Kupplungsstecker durch einen Benutzer in eine Kupplungsmuffe eingesteckt wird, wobei durch die durch den

Benutzer aufgebrachte Kraft sowohl jeweils mindestens ein Ventil geöffnet wird, um eine Druckmittelleitung an dem Kupplungssteckers mit einer Druckmittelleitung an der Kupplungsmuffe strömungstechnisch zu verbinden als auch eine formschlüssige Verbindung zwischen Kupplungsstecker und Kupplungsmuffe hergestellt wird, um die Verbindung bzw. den eingekuppelten Zustand zu stabilisieren.

Aus dem Stand der Technik bekannte Kupplungselemente weisen allerdings den Nachteil auf, dass in Abhängigkeit von dem beispielsweise an dem Kupplungsstecker oder der Kupplungsmuffe anlegenden Druck das Anschließen eines Werkzeugs an eine Hydraulikquelle nur wenig zuverlässig und unter besonderem Kraftaufwand möglich ist. **Kupplungselemente der vorgenannten Art sind bspw. In der** EP 2 687 767 A1 **sowie der** DE 103 519 97 A1 **beschrieben.**

Dem zuständigen Fachmann stellt sich daher die Aufgabe, ein Kupplungselement, insbesondere eine Kupplungsmuffe, anzugeben, die in Bezug auf die Sicherheit und Bedienungsfreundlichkeit verbessert ist.

Die vorgenannte Aufgabe bei einem gattungsgemäßen Kupplungselement für eine Hydraulikkupplung gelöst mit den Merkmalen des Kennzeichnungsteils des Patentanspruchs 1, nämlich indem zumindest der Muffeninnenkörper, die Druckhülse und der Ventilstößel während eines Kuppelvorgangs, insbesondere durch einen Kupplungsstecker, aus einer Ausgangsstellung, in der der Strömungskanal durch die Druckhülse und den Ventilstößel verschlossen ist und der Ventilstößel flachdichtend an der Verbindungsschnittstelle anliegt, entlang der Kupplungsachse A in eine erste Richtung in das Gehäuse hinein in eine Kuppelstellung verschiebbar sind. In der Ausgangsstellung ist das Kupplungselement vorzugsweise drucklos. Das Kupplungselement ist zum Zusammenwirken mit Kupplungssteckern vorzugsweise gemäß ISO 16028 (Stand: 12/1999) ausgebildet.

In der Kuppelstellung ist ein Kupplungsstecker mittels eines Sperrmittels, insbesondere einer Mehrzahl über den Umfang verteilt angeordneter Sperrkugeln, an dem Kupplungselement festlegbar. Vorzugsweise treten die Sperrkugeln in dafür vorgesehene Rücksprünge am Kupplungsstecker ein, so dass der Kupplungsstecker mit dem Kupplungselement, insbesondere mit der Kupplungsmuffe, formschlüssig verbunden ist. Dabei ragt der Kupplungsstecker zumindest teilweise in das Gehäuse des Kupplungselements hinein. In der Kuppelstellung ist der Strömungskanal des Kupplungselements durch die Druckhülse und den Ventilstößel verschlossen. Der Strömungskanal des Kupplungssteckers ist ebenfalls verschlossen. In der Kuppelstellung erfolgt das mechanische Verbinden des Kupplungselements, insbesondere einer Kupplungsmuffe, mit einem Kupplungsstecker.

Ausgehend von der Kuppelstellung sind zumindest der Muffeninnenkörper, die Druckhülse und der Ventilstößel in eine der ersten Richtung entgegengesetzte, zweite Richtung entlang der Kupplungsachse A bis in eine Anschlagstellung verschiebbar, wobei in der Anschlagstellung eine weitere Bewegung zumindest der Druckhülse, insbesondere nur der Druckhülse, in die zweite Richtung blockiert ist.

Ausgehend aus der Anschlagstellung bewegen sich zumindest der Muffeninnenkörper und der Ventilstößel weiter in die zweite Richtung bis in eine Öffnungsstellung, wobei in der Öffnungsstellung ein Strömungsquerschnitt zwischen Druckhülse und Ventilstößel freigegeben ist, wodurch der Strömungskanal des Kupplungselements freigegeben ist. Durch die Bewegung aus der Stellung, in der die Druckhülse nicht mehr weiter bewegt wird - der Anschlagstellung - in die Öffnungsstellung, wird das Ventil geöffnet. Ferner sind in der Öffnungsstellung die Druckhülse und der Ventilstößel zumindest teilweise in den Kupplungsstecker eingetreten, wodurch der Ventilstößel des Kupplungssteckers ebenfalls in seine Öffnungsposition gedrängt ist und auch der Strömungskanal des Kupplungssteckers freigegeben ist. In der Öffnungsstellung wirkt ein in seiner Verriegelungsstellung befindliches Verriegelungsmittel auf dem Muffeninnenkörper und den Ventilstößel, insbesondere hält das Verriegelungsmittel den Ventilstößel und den Muffeninnenkörper in ihrer Öffnungsstellung. In der Öffnungsstellung ist vorteilhaft eine Bewegung des Muffeninnenkörpers und des Ventilstößels in die erste Richtung, also das Verschließen des Strömungskanals des Kupplungselements, durch das auf den Muffeninnenkörper wirkendes Verriegelungsmittel verhindert, das insbesondere den Ventilstößel und den Muffeninnenkörper in der Öffnungsstellung fixiert. In der Öffnungsstellung ist der Kuppelvorgang, also das Herstellen einer mechanischen Verbindung und das anschließende Öffnen eines Strömungsquerschnitts - Öffnen der Ventile, beendet und der Strömungskanal freigegeben.

Beispielsweise ist die Druckhülse in dem Muffeninnenkörper verschiebbar geführt und mittels einer Dichtung gegenüber einer Innenfläche des Muffeninnenkörpers abgedichtet. Vorzugsweise wirkt ein Rückstellmittel, insbesondere in Form einer Spiralfeder, zwischen Druckhülse und Muffeninnenkörper. Die Druckhülse umgibt den Ventilstößel und begrenzt den Strömungskanal zumindest teilweise, so dass der Strömungskanal zwischen Druckhülse und Ventilstößel freigebbar und verschließbar ist. Der Muffeninnenkörper ist vorzugsweise ebenfalls verschiebbar in dem Gehäuse gehalten und fest mit dem Ventilstößel verbunden. Das Gehäuse ist insbesondere mehrteilig ausgebildet, vorzugsweise mindestens zwei-, drei- oder vierteilig ausgebildet.

Das Kupplungselement weist an einer ersten Endseite des Gehäuses mindestens eine Verbindungsschnittstelle auf, mit der eine Verbindung, beispielsweise mit einem Kupplungsstecker herstellbar ist. An der zweiten, entlang der Kupplungsachse gegenüberliegenden Endseite des Gehäuses weist das Kupplungselement eine Anschlussschnittstelle auf, an die beispielsweise eine Rohr- oder Schlauchleitung anschließbar ist, insbesondere mittels einer Überwurfmutter aufschraubbar ist. Die Anschlussschnittstelle dient vorzugsweise dem Anschluss an eine Druckmittelquelle.

Zum Kuppeln des Kupplungselements, also zum Herstellen einer mechanischen und fluidischen Verbindung zwischen dem Kupplungselement und einem Kupplungsstecker, wird der Kupplungsstecker an der Verbindungsschnittstelle derart in das Kupplungselement hineingedrückt, dass der Kupplungsstecker zumindest den Muffeninnenkörper, die Druckhülse und den Ventilstößel aus der Ausgangsstellung entlang der Kupplungsachse in das Gehäuse hinein in die Kuppelstellung verschiebt. Sowohl das Kupplungselement als auch der Kupplungsstecker bleiben in der Kuppelstellung vollständig geschlossen, so dass kein Druckmittel austreten kann. Vorzugsweise steht zumindest der Kupplungsstecker beim Kuppeln unter Druck. Das Verschieben mindestens des Muffeninnenkörpers, der Druckhülse und des Ventilstößels aus der Kupplungsstellung in die Anschlagstellung erfolgt vorzugsweise dadurch, dass das Kupplungselement ausgehend von der Anschlussschnittstelle mit einem Druckmittel beaufschlagt wird, wobei das Druckmittel zumindest auf den Muffeninnenkörper, die Druckhülse und den Ventilstößel so einwirkt, dass diese in Richtung des in der Kuppelstellung mit dem Kupplungselement formschlüssig verrasteten Kuppelsteckers gedrängt und zumindest teilweise in diesen hineingedrückt werden. Bevor das Kupplungselement mit dem Druckmittel beaufschlagt wird, ist der erste Teil des Kuppelns, nämlich das Herstellen einer mechanischen Verbindung zwischen Kupplungselement, insbesondere Kupplungsmuffe, und Kupplungsstecker abgeschlossen.

In der Anschlagstellung wird eine weitere Bewegung der Druckhülse dadurch verhindert, dass diese zumindest mittelbar an dem Kupplungsstecker anliegt und durch das Vorhandensein des Kupplungssteckers in ihrer weiteren Bewegung blockiert wird. Ausgehend von der Anschlagstellung bewegt sich lediglich der mit dem Muffeninnenkörper verbundene Ventilstößel weiter in den Kupplungsstecker hinein, wodurch ein Strömungsquerschnitt geöffnet und eine fluidische Verbindung zwischen Kupplungselement und Kupplungsstecker hergestellt ist.

Insbesondere um ein unbeabsichtigtes Schließen des Strömungsquerschnitts zu verhindern, ist ein Verriegelungsmittel vorhanden, das in der Öffnungsstellung des Kupplungselements in seiner Sperrposition ist und eine Bewegung des Muffeninnenkörpers und des Ventilstößels aus der Öffnungsstellung zurück in die erste Richtung, also in Richtung der Anschlagstellung bzw. der Kuppelstellung, verhindert. Das Verriegelungsmittel befindet sich in der Ausgangsstellung und in der Öffnungsstellung in seiner Sperrposition und wird während des Kuppelvorgangs zumindest temporär in seine Freigabeposition verbracht.

Die zuvor beschriebene Funktionalität des Kupplungselements während des Kuppelvorgangs wirkt als Druckübersetzer und ermöglicht, dass auch bei hohen im Kupplungsstecker anliegenden Drücken ein Herstellen einer Verbindung zwischen dem Kupplungselement und dem Kupplungsstecker möglich ist, insbesondere das Öffnen der Ventile möglich ist, indem ein Teil der Bewegung des Muffeninnenkörpers, des Ventilstößels und der Druckhülse durch den in dem Kupplungselement anliegenden bzw. angelegten Druck eines Druckmittels bewirkt werden. Das Herstellen nur der mechanischen Verbindung ist unabhängig von dem im Kupplungsstecker anliegenden Druck. Vorteilhaft erfolgt das eigentliche Öffnen des Kupplungselements und des Kupplungssteckers durch den im Kupplungselement anliegenden Druck, insbesondere den Betriebsdruck.

Das "Kuppeln" oder der "Kuppelvorgang" umfasst stets sowohl das Herstellen einer mechanischen Verbindung zwischen dem Kupplungselement und beispielsweise einem Kupplungsstecker als auch das Öffnen mindestens eines, vorzugsweise aller, Ventile zum Herstellen einer fluidischen Verbindung. Das Kupplungselement gemäß der vorliegenden Erfindung weist den Vorteil auf, dass das Herstellen der mechanischen Verbindung und das Öffnen der Ventile unabhängig voneinander erfolgen. In der Kuppelstellung erfolgt das Herstellen der mechanischen Verbindung, ohne dass notwendigerweise die Ventile geöffnet werden. Erst wenn der Muffeninnenkörper, die Druckhülse und der Ventilstößel zurück, also in die zweite Richtung bewegt werden, erfolgt das Herstellen einer fluidischen Verbindung durch Öffnen der Ventile. Das Kuppeln erfolgt folglich zweistufig.

Gemäß einer ersten Ausgestaltung des Kupplungselements ist vorgesehen, dass die Ausgangsstellung ausgehend von der Öffnungsstellung durch einen Entkuppelvorgang erreichbar ist, nämlich indem das Sperrmittel durch Verschieben zumindest eines Teils des Gehäuses, insbesondere des gesamten Gehäuses, relativ zum Sperrmittel freigegeben wird, so dass ein gekuppelter Kupplungsstecker entfernbar ist, und dass durch das Entfernen des Kupplungssteckers eine Bewegung der Druckhülse aus der Anschlagstellung in die zweite Richtung freigegeben wird, bis die Druckhülse dichtend am Ventilstößel anliegt. Durch eine Relativbewegung zwischen dem Gehäuse und dem Sperrmittel wird das Sperrmittel gelöst, insbesondere indem die Sperrkugeln des Sperrmittels in einen Rücksprung am Gehäuse eintreten können, um eine Bewegung des Kupplungssteckers aus dem Kupplungselement hinaus und damit eine dem Kupplungsstecker folgende Bewegung der Druckhülse in Richtung der Ausgangsstellung ermöglicht.

**Erfindungsgemäß** ist vorgesehen, dass ein Muffenkörper vorhanden ist, dass der Muffeninnenkörper in den Muffenkörper geführt ist, **und** dass zwischen Muffenkörper und Muffeninnenkörper ein Rückstellmittel, **in Form einer** Feder, angeordnet ist. Beispielsweise ist das Verriegelungsmittel so angeordnet, dass es zwischen Muffenkörper und Muffeninnenkörper wirkt. Vorzugsweise verhindert das Verriegelungsmittel eine Relativbewegung zwischen Muffenkörper und Muffeninnenkörper zumindest in der Öffnungsstellung und in der Ausgangsstellung. Während des Kuppelvorgangs gelangt das Verriegelungsmittel vorzugweise vor Erreichen der Kuppelstellung seine Freigabeposition, so dass in der Kuppelstellung eine Relativbewegung zwischen Muffenkörper und Muffeninnenkörper erfolgt ist, insbesondere indem der Muffeninnenkörper nach der Freigabe durch das Verriegelungsmittel weiter in den Muffenkörper eingedrungen ist.

Vorteilhaft ist ein Rückstellmittel in Form einer Feder zwischen dem Muffenkörper und dem Muffeninnenkörper wirkend angeordnet. In der Ausgangsstellung ist die Feder mit einer Vorspannung zwischen Muffenkörper und dem Muffeninnenkörper wirkend gehalten, dass Verriegelungsmittel verhindert ein komprimieren der Feder. In der Ausgangsstellung befindet sich das Verriegelungsmittel, das eine Bewegung des Muffeninnenkörpers in die erste Richtung verhindert, in seiner Sperrstellung, so dass der Muffeninnenkörper nur zusammen mit dem Muffenkörper in die erste Richtung bewegbar ist. Während des Kuppelvorgangs wird die Feder beim Verschieben des Muffeninnenkörpers in die erste Richtung ab dem Zeitpunkt komprimiert, ab dem das Verriegelungsmittel in seine Freigabeposition gelangt. Die Feder ist folglich in der Kuppelstellung maximal komprimiert, so dass sie eine Bewegung des Muffeninnenkörpers, der Druckhülse und des Ventilstößels in die zweite Richtung mit einer in die zweite Richtung gerichteten Kraft unterstützt.

Insbesondere um das Kupplungselement in der Öffnungsstellung festzulegen, ist gemäß einer weiteren Ausgestaltung vorgesehen, dass das Verriegelungsmittel mindestens eine Verriegelungskugel, eine den Muffenkörper umgebende Sperrhülse und mindestens ein Federelement aufweist, insbesondere dass das Verriegelungsmittel zwischen Muffenkörper und Muffeninnenkörper wirkt. Vorzugsweise umfasst das Verriegelungsmittel eine Mehrzahl von über den Umfang angeordneter Verriegelungskugeln, insbesondere mindestens vier Verriegelungskugeln. Die Verriegelungskugeln durchtreten den Muffenkörper vorzugsweise in dafür vorgesehenen Ausnehmungen, so dass sofern die Verriegelungskugeln durch den Muffenkörper hindurch getreten sind, die Verriegelungskugeln auf der Innenseite mit dem Muffeninnenkörper zusammenwirken und dessen Bewegung relativ zum Muffenkörper blockieren.

Damit die Verriegelungskugeln in dieser Sperrposition gehalten werden, ist auf dem Außenumfang des Muffenkörpers eine Sperrhülse angeordnet. Die Sperrhülse weist einen stufenförmigen Querschnitt auf, so dass in einer bestimmten Position der Sperrhülse in Bezug auf die Ausnehmungen für die Verriegelungskugeln, die Verriegelungskugeln in Richtung der Außenseite des Muffenkörpers ausweichen können, um eine Bewegung des Muffeninnenkörpers in dem Muffenkörper freizugeben.

Die Sperrhülse ist entlang der Kupplungsachse bewegbar gehalten und mit einem Federelement mit einer in die erste Richtung wirkenden Kraft, also in einer Richtung in das Gehäuse hinein, belastet. Das Federelement stützt sich an einem dafür vorgesehenen Absatz an dem Außenumfang des Muffenkörpers ab. Auf der dem Federelement gegenüberliegenden Seite stützt sich die Sperrhülse an dem Gehäuse ab.

Eine weitere Ausgestaltung des Kupplungselements sieht vor, dass ein Muffengrundkörper vorhanden ist, dass der Muffengrundkörper mit dem Muffenkörper verbunden ist, insbesondere nämlich auf den Muffenkörper aufgeschraubt ist. Ferner ist vorzugsweise vorgesehen, dass ein Muffenrückstellmittel vorhanden ist, und dass das Muffenrückstellmittel zwischen Muffenkörper und Gehäuse und/oder zwischen Muffengrundkörper und Gehäuse wirkt. Das Muffenrückstellmittel, insbesondere in Form einer Spiralfeder, ist vorzugsweise so im Gehäuse angeordnet, dass es sowohl auf den Muffenkörper als auch auf den Muffengrundkörper wirkt, wodurch die Einheit aus Muffenkörper und Muffengrundkörper durch das Muffenrückstellmittel stets in eine neutrale Ausgangsposition gedrängt wird. Die Einheit aus Muffenkörper und Muffengrundkörper befindet sich insbesondere in der Ausgangsstellung und in der Öffnungsstellung in der neutralen Ausgangsposition. Wird folglich das Gehäuse relativ zum Muffenkörper bzw. zum Muffengrundkörper bzw. der Muffenkörper bzw. zum Muffengrundkörper relativ zum Gehäuse bewegt, wirkt das Muffenrückstellmittel dieser Bewegung entgegen. Ein Auslenken des Muffenkörpers und des Muffengrundkörpers aus der Ausgangsposition erfolgt insbesondere beim Kuppeln und beim Entkuppeln.

Vorzugsweise ist vorgesehen, dass das Sperrmittel des Kupplungselements mit dem Muffengrundkörper zusammenwirkt, insbesondere in dem Muffengrundkörper angeordnet ist. Vorteilhaft sind die Sperrkugeln des Sperrmittels in Ausnehmungen in dem Muffengrundkörper gehalten und weichen bei einer Bewegung des Gehäuses relativ zum Sperrmittel bzw. dem Muffenkörper und dem Muffengrundkörper in Rücksprünge in dem Gehäuse aus.

Beispielsweise auch um die Verbindungsschnittstelle in der ungekuppelten Ausgangsstellung abzudichten, ist gemäß einer weiteren Ausgestaltung des Kupplungselements vorgesehen, dass mindestens ein Kolben vorhanden ist, dass der Kolben die Druckhülse umgibt, dass der Kolben in der Ausgangsstellung die Verbindungsschnittstelle des Kupplungselements zumindest teilweise verschließt, bevorzugt dass an der Verbindungsschnittstelle eine Abstreiferdichtung angeordnet ist, insbesondere dass die Abstreiferdichtung zumindest im Ausgangszustand an dem Kolben oder an dem Muffengrundkörper anliegt.

In der Ausgangsstellung liegt der Kolben vorzugsweise etwa in einer Ebene mit dem Ventilstößel und der Stirnfläche der Druckhülse. Der Kolben wirkt vorzugsweise mit dem Sperrmittel zusammen, das ebenfalls mit dem Muffengrundkörper und dem Gehäuse zusammenwirkt. Eine Bewegung des Kolbens aus der Ausgangsstellung wird folglich insbesondere durch das Sperrmittel verhindert, insbesondere indem die Sperrkugeln zumindest teilweise in den Kolben eingetreten sind. Um eine Bewegung des Kolbens freizugeben, muss das Gehäuse relativ zum Sperrmittel verschoben werden. Der Kolben ist ebenfalls in die erste Richtung, also in das Gehäuse hinein, verschiebbar und ist die Druckhülse umgebend, innerhalb des Muffengrundkörpers gehalten. Vorzugsweise ist eine Kolbenfeder vorgesehen, die den Kolben in seine Ausgangsstellung in die zweite Richtung drängt.

Um zu verhindern, dass beim Einkuppeln oder Auskuppeln Schmutz in das Kupplungselement gelangt, ist an der Verbindungsschnittstelle mindestens eine Abstreiferdichtung angeordnet, die auf einem äußeren Radius gehalten ist und sich in der Ausgangsstellung radial nach innen in Richtung der Kupplungsachse erstreckt. Vorzugsweise weist die Abstreiferdichtung eine derartige radiale Erstreckung auf, dass sie in der Ausgangsstellung an einem Außenumfang des Kolbens oder an einem Außenumfang des Muffengrundkörpers anliegt. Die Abstreiferdichtung, die an dem Muffengrundkörper anliegt, ist auch für Ausführungsbeispiele ohne Kolben vorgesehen.

Die Verbindung mit einem Kupplungsstecker lässt sich vorteilhaft vereinfachen, wenn gemäß einer weiteren Ausgestaltung vorgesehen ist, dass in Kupplungsachsenrichtung betrachtet, eine Stützhülse zwischen Muffengrundkörper und Muffenkörper angeordnet ist, und dass die Stützhülse als Lager für eine zwischen Kolben und Stützhülse angeordnete Kolbenfeder dient. Die Kolbenfeder stützt sich folglich nicht wie bei gattungsgemäßen Kupplungselementen üblich am Muffeninnenkörper ab, sondern über die Stützhülse am Muffenkörper bzw. am Muffengrundkörper. Durch diese vorteilhafte Kraftübertragung erhöht sich die auf den Kolben wirkende Federkraft in der Kuppelstellung, was sich vorteilhaft auf das Einkuppeln, insbesondere das Öffnen des Strömungskanals, auswirkt.

Ferner hat sich gemäß einer weiteren Ausgestaltung als vorteilhaft herausgestellt, wenn die Druckhülse einen Druckhülsenansatz aufweist, und dass zwischen Druckhülsenansatz und Muffeninnenkörper ein Rückstellmittel angeordnet ist, insbesondere eine Spiralfeder, wobei ferner bevorzugt ist, dass der Druckhülsenansatz auf die Druckhülse aufgeschraubt ist. Das Rückstellmittel wirkt folglich zwischen Muffeninnenkörper und Druckhülsenansatz und drängt die Druckhülse in die zweite Richtung, also in Richtung der Ausgangsstellung. Das Rückstellmittel ist in der eingekuppelten Stellung, also in der Öffnungsstellung maximal komprimiert.

Insbesondere um den Ventilstößel innerhalb des Strömungskanals zu halten, ist gemäß einer weiteren Ausgestaltung vorgesehen, dass der Ventilstößel mittels einer Stößelführung innerhalb des Muffeninnenkörpers gehalten ist, vorteilhaft mittels einer eingeschraubten Spannhülse eingeklemmt ist. Der Ventilstößel ist folglich starr mit dem Muffeninnenkörper verbunden und bewegt sich gleichzeitig mit dem Muffeninnenkörper. Die Stößelführung umgreift den Ventilstößel und legt gleichzeitig an einem Innenumfang des Muffeninnenkörpers an. Entlang der Kupplungsachse ist die Stößelführung mittels einer in den Muffeninnenkörper eingeschraubten Spannhülse eingeklemmt.

Insbesondere für das zuverlässige Verschließen des Strömungskanals hat sich gemäß einer weiteren Ausgestaltung als vorteilhaft herausgestellt, wenn vorgesehen ist, dass der Ventilstößel an seinem Ventilstößelkopf eine Dichtung aufweist, dass die Dichtung zumindest teilweise von einer Kammerungshülse gehalten ist, und dass die Kammerungshülse die Dichtung zumindest teilweise übergreift. Die Dichtung liegt folglich ausgehend von der Kupplungsachse in Radialrichtung an einem Innenumfang der Druckhülse dichtend an. Die Dichtung wird von einer Kammerungshülse an dem Ventilstößelkopf gehalten, der die Dichtung ebenfalls mit einem Hinterschnitt übergreift. Vorzugsweise weist die Kammerungshülse einen Rücksprung auf, in den die Dichtung zumindest teilweise in einer Richtung parallel zur Kupplungsachse hineinragt.

Als besonders vorteilhaft hat sich zudem herausgestellt, wenn gemäß einer weiteren Ausgestaltung vorgesehen ist, dass die Dichtung einen T-förmigen oder kreuzförmigen Querschnitt aufweist, insbesondere dass die Dichtung zwischen einer Aufnahmenut in dem Ventilstößelkopf und der Kammerungshülse gehalten ist. Bei einer T-förmigen Dichtung ist die senkrechte T-Basis in Richtung der Druckhülse gerichtet, so dass der waagerechte T-Steg einerseits in eine Aufnahmenut an dem Ventilstößelkopf, andererseits in einen dafür vorgesehenen Rücksprung an der Kammerungshülse eingreifen kann. Dadurch ist sichergestellt, dass die Dichtung auch bei hohen Strömungsgeschwindigkeiten nicht vom Ventilstößelkopf gelöst wird. Es ist vorgesehen, dass der waagerechte T-Steg und der senkrechte T-Steg gleichlang sind, oder dass der waagerechte oder der senkrechte T-Steg kürzer als der jeweils andere ist.

Vorzugsweise um beim Ein- oder Auskuppeln den innerhalb des Kupplungselements anliegenden Druck zu reduzieren, ist gemäß einer weiteren Ausgestaltung vorgesehen, dass der Muffenkörper einen zylindrischen Ansatzabschnitt aufweist, dass ein Spalt zwischen Gehäuse und Ansatzabschnitt im ungekuppelten und im gekuppelten Zustand des Kupplungselements mit einem Dichtmittel dichtend verschlossen ist, und dass der Muffenkörper zumindest während des Kuppelns und des Entkuppelns derart entlang der Kupplungsachse verschoben ist, dass ein Strömungsquerschnitt zum Abführen von Druckmittel, insbesondere in einem Ringraum, ausgebildet ist.

Das Dichtmittel ist beispielsweise als mindestens eine Dichtung ausgebildet. Das Dichtmittel ist beispielsweise an dem zylindrischen Ansatzabschnitt oder an dem Gehäuse gehalten. In der ungekuppelten Ausgangsstellung und in der gekuppelten Öffnungsstellung ist der Spalt zwischen Gehäuse und Ansatzabschnitt durch das Dichtmittel verschlossen. Das Dichtmittel und/oder der Ansatzabschnitt und/oder das Gehäuse sind so ausgebildet, dass eine Verschiebung des Ansatzabschnitts in einer Richtung parallel zur Kupplungsachse dazu führt, dass das Dichtmittel in der verschobenen Stellung des Ansatzabschnitts nicht mehr dichtend mit dem Gehäuse bzw. dem Ansatzabschnitt zusammenwirkt. Wenn beispielsweise das Dichtmittel, beispielsweise in Form mindestens einer Dichtung, an dem Ansatzabschnitt gehalten ist, wirkt das Dichtmittel im dichtenden Zustand mit einer radial gegenüberliegenden Dichtfläche zusammen. Beispielsweise in entlang der Kupplungsachse betrachtet, rechts und links der Dichtfläche eine umlaufende Ausnehmung oder ein Rücksprung vorgesehen, so dass durch eine Verschiebung keine Dichtwirkung mehr zur Dichtfläche besteht und zwischen der Ausnehmung bzw. dem Rücksprung und dem Dichtmittel ein Strömungsquerschnitt, insbesondere ein Ringspalt, ausgebildet ist, durch den Druckmittel abführbar ist. Es ist auch vorgesehen dass die Dichtfläche einen kleineren Durchmesser als die in Kupplungsachsenrichtung vor und hinter der Dichtfläche liegenden Bereiche aufweist, so dass der Strömungsquerschnitt durch die axiale Verschiebung zwischen dem Dichtmittel und dem rechts und links angeordneten größeren Durchmesser ausgebildet ist.

Ferner ist vorgesehen, dass das Dichtmittel, insbesondere in Form einer Dichtung, am Gehäuse gehalten ist. Mindestens eine Dichtfläche ist dann am Ansatzabschnitt ausgebildet, wobei in Kupplungsachsenrichtung gesehen rechts und links von der Dichtfläche ein Rücksprung bzw. eine Ausnehmung vorgesehen ist. Der Strömungsquerschnitt ist dann freigegeben, wenn sich das Dichtmittel im Bereich des Rücksprungs bzw. der Ausnehmung befindet. Zudem ist vorgesehen, dass eine Dichtfläche am Ansatzabschnitt einen größeren Durchmesser als die die Dichtfläche in Kupplungsachsenrichtung gesehen rechts und links umgebenden Bereiche aufweist.

Folglich wird sowohl beim Einkuppeln als auch beim Auskuppeln Druckmittel durch eine Relativbewegung zwischen Dichtfläche und Dichtmittel abgeführt.

Als besonders vorteilhaft hat sich gemäß einer Ausgestaltung herausgestellt, wenn vorgesehen ist, dass der im Wesentlichen zylindrische Ansatzabschnitt mindestens eine lokalen Durchmessererweiterung aufweist, dass die Durchmessererweiterung im ungekuppelten und im gekuppelten Zustand des Kupplungselements, insbesondere in der Ausgangsstellung und in der Öffnungsstellung, mit mindestens einer, insbesondere radial auf die Durchmessererweiterung, wirkenden, Dichtung dichtend zusammenwirkt, und dass der Muffenkörper zumindest während des Kuppelns und des Entkupplens derart entlang der Kupplungsachse verschoben ist, dass zwischen der Durchmessererweiterung und der Dichtung ein Ringspalt zum Abführen von Druckmittel gebildet ist. Beim Kuppelvorgang, bei dem ein Kupplungsstecker über die Verbindungsschnittstelle des Kupplungselements zumindest teilweise in das Innere des Gehäuses eingeschoben wird, wird auch der Muffenkörper in die erste Richtung, also in das Gehäuse hinein bewegt. Dabei wird auch der Ansatzabschnitt entlang der Kupplungsachse verschoben so dass die Dichtung von der Durchmessererweiterung herunter gleitet und zwischen der Dichtung und dem die Durchmessererweiterung umgebenen, kleineren Durchmesser des Ansatzabschnitts ein Ringspalt freigegeben ist, durch den das Druckmittel abgeführt werden kann, nämlich in einen dort vorhandenen Ringraum eingeleitete wird, der mit einem Druckmitteltank verbunden ist. Die Erstreckung der Durchmessererweiterung entlang der Kupplungsachse ist so gewählt, das die Bewegung des Muffenkörpers entlang der Kupplungsachse beim Kuppeln und Entkuppeln dazu führt, dass die Dichtung von der Durchmessererweiterung herunter gleitet und ein Ringspalt freigegeben wird.

Beim Entkuppeln wird der Muffenkörper zumindest teilweise in die zweite Richtung bewegt, so dass die Dichtung auf der gegenüberliegenden Seite von der Durchmessererweiterung herunter gleitet und sich zwischen dem auf dem anderen Seite der Durchmessererweiterung vorhandenen, geringeren Durchmesser des Ansatzabschnitts und der Dichtung ebenfalls ein Ringspalt ausbildet, durch den Druckmittel abführbar ist.

Folglich wird sowohl beim Einkuppeln als auch beim Auskuppeln Druckmittel durch eine Relativbewegung des zylindrischen Ansatzabschnitts zur auf der Durchmessererweiterung angeordneten Dichtung abgeführt.

Vorzugsweise um zu verhindern, dass das Kupplungselement bei zu hohen Drücken innerhalb des Kupplungselements gekuppelt wird, ist gemäß einer weiteren Ausgestaltung vorgesehen, dass ein Blockiermittel vorhanden ist und dass mit dem Blockiermittel eine Bewegung des Muffeninnenkörpers und/oder des Muffenkörpers innerhalb des Gehäuses begrenzbar, vorzugsweise vollständig blockierbar ist, und dass durch die Begrenzung bzw. Blockierung ein Kuppeln des Kupplungselements verhindert wird. Das Blockiermittel wirkt folglich mit dem Muffeninnenkörper oder dem Muffenkörper derart, insbesondere formschlüssig zusammen, dass eine Bewegung des Muffeninnenkörpers und/oder des Muffenkörpers durch das Blockiermittel begrenzt oder blockiert wird. Dadurch kann, selbst wenn versucht wird den Kupplungsstecker in die Verbindungsschnittstelle des Kupplungselements einzuführen, keine Bewegung des Ventilstößels oder der Druckhülse erfolgen, so dass ein Kuppeln nicht möglich ist. Das Blockiermittel verhindert folglich ein Kuppeln.

Besonders bevorzugt ist vorgesehen, dass das Blockiermittel gemäß einer weiteren Ausgestaltung druckabhängig wirkt, also mit dem Blockiermittel eine Bewegung in Abhängigkeit von dem in dem Kupplungselement anliegenden Druck des Druckmittels begrenzbar ist, insbesondere ab einem vorbestimmten Druckschwellenwert, beispielsweise von 1 MPa, 1,5 MPa oder 2 MPa, begrenzt wird.

Dazu ist vorzugsweise vorgesehen, dass das Blockiermittel einen Stößel mit einer zentralen Durchgangsbohrung sowie mindestens eine Feder aufweist. Der Stößel weist einen Stößelkopf auf, der in einem Aufnahmeraum gehalten ist. Der Aufnahmeraum steht über die zentrale Durchgangsbohrung in fluidischem Kontakt mit dem Strömungskanal, so dass das in dem Strömungskanal vorhandene Druckmittel auch durch die Durchgangsbohrung in den Aufnahmeraum gelangt. Durch die Geometrie des Stößelkopfes und die Eigenschaften der Feder kann der Druckschwellenwert festgelegt werden, ab dem eine Bewegung des Stößels erfolgt. Ab einem bestimmten Druckschwellenwert wird folglich der Stößel durch den Druck in Richtung der Kupplungsachse bewegt, wodurch der Stößel den Muffenkörper in seiner Bewegung blockiert, insbesondere eine Bewegung des Ansatzabschnitts des Muffenkörpers blockiert.

Eine weitere Ausgestaltung sieht vor, dass ein Anzeigemittel vorhanden ist, und dass mit dem Anzeigemittel ein Druckzustand innerhalb des Gehäuses anzeigbar ist, wodurch ein Kuppeln des Kupplungselements bei vorbestimmten Druckzuständen durch Anzeige verhinderbar ist. Das Anzeigemittel ist mechanisch und/oder elektrisch und/oder elektromechanisch ausgebildet. Vorzugsweise weist das Anzeigemittel ebenfalls einen Stößel und ein Federelement auf. Der Stößel steht mit dem Strömungskanal in Verbindung, so dass das Druckmittel auf zumindest ein Ende des Stößels wirken kann. Durch den im Strömungskanal anliegenden Druck, wird ab einem bestimmten Druckschwellenwert der Stößel gegen die Kraft der Feder bewegt, so dass auf der Außenseite des Kupplungselements durch den hervorstehenden Stößel angezeigt wird, das ein bestimmter Druckschwellenwert überschritten ist. Die Sichtbarkeit des Stößels an der Außenseite des Gehäuses zeigt einem Benutzer an, dass ein Kuppeln des Kupplungselements nicht erfolgen darf.

Im Einzelnen gibt es nun eine Vielzahl von Möglichkeiten, das beschriebene Kupplungselement auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Kupplungselements in geschnittener Seitenansicht,
- Fig. 2: ein Ausführungsbeispiel eines Kupplungselements in der Kuppelstellung mit eingebrachtem Kupplungsstecker,
- Fig. 3: ein Ausführungsbeispiel eines Kupplungselements in der Öffnungsstellung mit eingebrachtem Kupplungsstecker,
- Fig. 4: ein Ausführungsbeispiel eines Kupplungselements bereit zum Entkuppeln,
- Fig. 5: ein Ausführungsbeispiel eines Kupplungselements mit Detailansicht des Ventilstößelkopfes,
- Fig. 6: ein Ausführungsbeispiel eines Kupplungselements mit Detailansicht der Durchmessererweiterung,
- Fig. 7: ein Ausführungsbeispiel eines Kupplungselements mit Detailansicht eines Blockiermittels,
- Fig. 8: ein Ausführungsbeispiel eines Kupplungselements mit Detailansicht eines Anzeigemittels,
- Fig. 9: ein Ausführungsbeispiel eines Kupplungselements mit Detailansicht einer Abstreiferdichtung, und
- Fig. 10: ein weiteres Ausführungsbeispiel eines Kupplungselements mit einer Detailansicht einer Abstreifersdichtung.

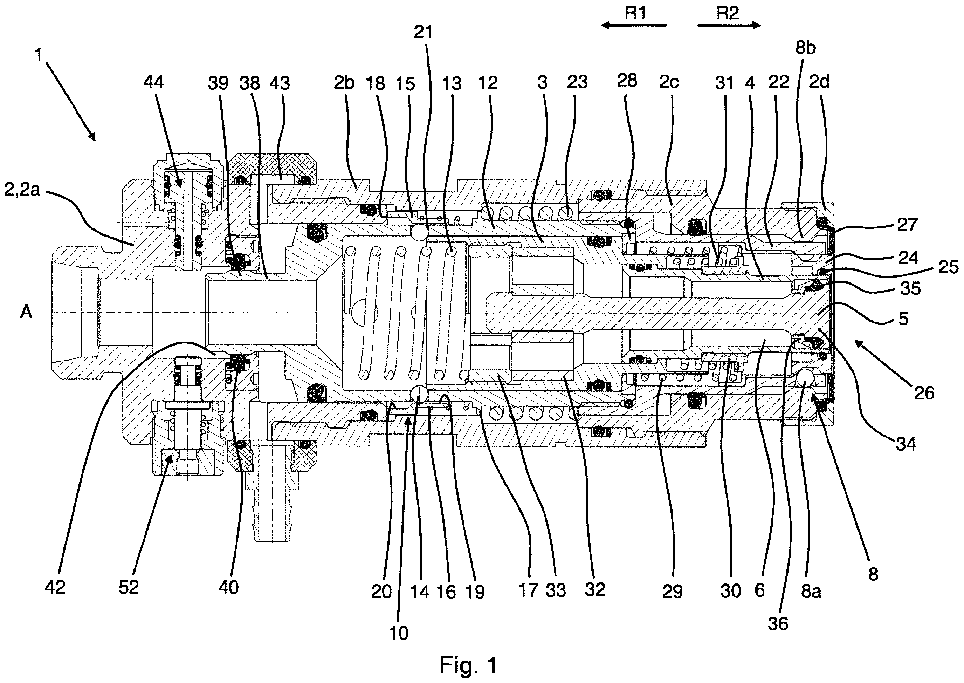

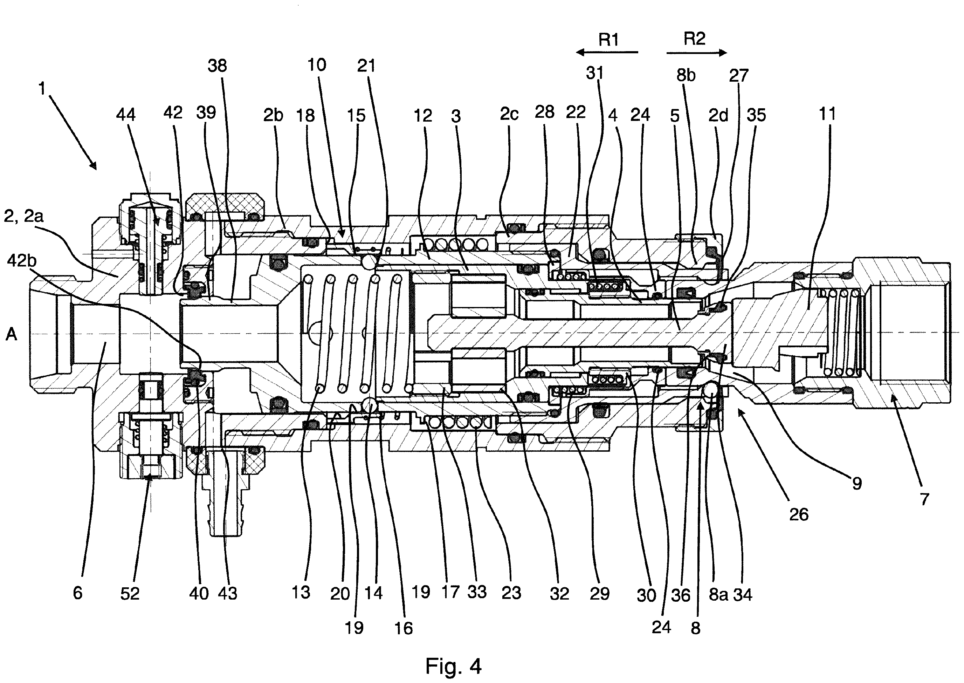

Fig. 1 bis 4 zeigen ein Ausführungsbeispiel eines Kupplungselements 1 in verschiedenen Stellungen während des Kuppelvorgangs (Fig.1 bis Fig. 3) und des Entkuppelns (Fig. 4). Bei dem Kupplungselement 1 handelt es sich um eine Kupplungsmuffe für eine Hydraulikkupplung, insbesondere eine Schnellkupplung an einer nicht weiter dargestellten Druckmittelleitung. Das Kupplungselement 1 weist ein Gehäuse 2 auf, dass bei diesem Ausführungsbeispiel vierteilig ausgebildet ist, nämlich ein Gehäusegrundelement 2a, eine erste Gehäusehülse 2b, eine zweite Gehäusehülse 2c und ein Gehäuseabschlusselement 2d aufweist. Die Gehäuseteile 2a, 2b, 2c und 2d sind jeweils miteinander verschraubt und gegeneinander gedichtet.

Das Kupplungselement 1 weist ferner einen Muffeninnenkörper 3, eine Druckhülse 4 und einen Ventilstößel 5 auf. Der Ventilstößel 5 ist innerhalb eines in dem Gehäuse 2 ausgebildeten Strömungskanals 6 zentral gehalten. Eine Kupplungsachse A verläuft ebenfalls zentral durch das Gehäuse 2 des Kupplungselements 1. Der Muffeninnenkörper 3, die Druckhülse 4 und der Ventilstößel 5 sind entlang der Kupplungsachse A verschiebbar in dem Gehäuse 2 gehalten.

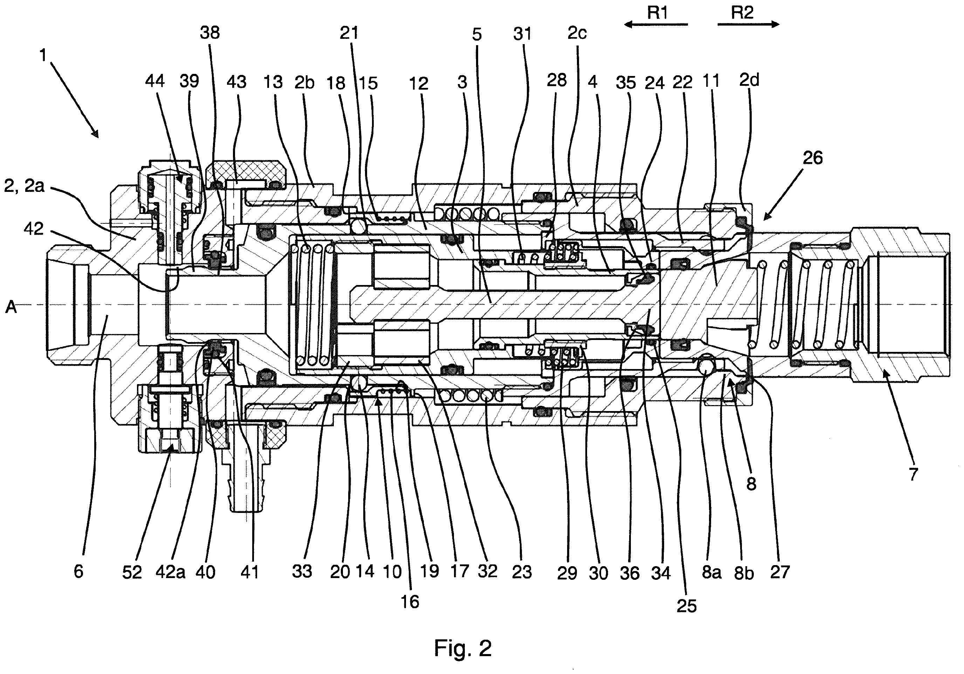

Zum Kuppeln, also zum Herstellen einer mechanischen und fluidischen Verbindung zwischen dem Kupplungselement 1 und einem Kupplungsstecker 7 sind während eines Kuppelvorgangs zumindest der Muffeninnenkörper 3, die Druckhülse 4 und der Ventilstößel 5 aus der Ausgangsstellung gemäß Fig. 1 entlang der Kupplungsachse A in eine erste Richtung R1 in das Gehäuse 2 hinein in eine Kuppelstellung gemäß Fig. 2 verschiebbar.

In der Kuppelstellung gemäß Fig. 2 ist der Kupplungsstecker 7 mittels eines Sperrmittels 8, das hier als eine Mehrzahl über den Umfang verteilter Sperrkugeln 8a ausgebildet ist, die mit dem Gehäuse 2, insbesondere einem Vorsprung 8b, zusammenwirken, an dem Gehäuse 2 des Kupplungselement 1 formschlüssig festlegbar. Ausgehend von der Kuppelstellung gemäß Fig. 2 werden zumindest der Muffeninnenkörper 3, die Druckhülse 4 und der Ventilstößel 5 in eine der ersten Richtung R1 entgegengesetzte zweite Richtung R2 entlang der Kupplungsachse A in eine Anschlagstellung der Druckhülse 4 bewegt, wobei die Druckhülse 4 in der Anschlagsstellung bezüglich einer weiteren Bewegung in die zweite Richtung R2 blockiert ist.

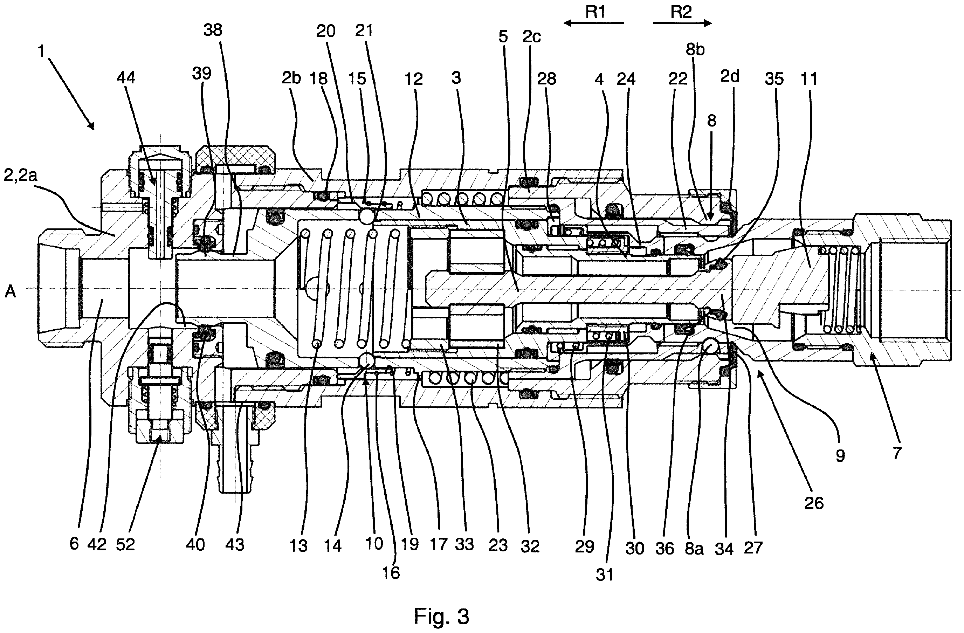

Ausgehend von der Anschlagstellung bewegen sich der Muffeninnenkörper 3 und der Ventilstößel 5 in die in Fig. 3 dargestellte Öffnungsstellung, so dass ein Strömungsquerschnitt 9 zwischen der Druckhülse 4 und dem Ventilstößel 5 freigegeben ist. Fig. 3 zeigt auch die Anschlagstellung der Druckhülse 4, in der eine weitere Bewegung in die Richtung R2 blockiert ist.

In der Öffnungsstellung gemäß Fig. 3 wird eine Bewegung des Muffeninnenkörpers 3 und des Ventilstößels 5 in die erste Richtung R1 durch ein in seiner Sperrstellung befindliches Verriegelungsmittel 10 verhindert. Der Kupplungsstecker 7 kann nicht weiter in Richtung R1 in das Gehäuse 2 eindringen und den Muffeninnenkörper 3 verschieben, da der Kupplungsstecker 7 durch das Sperrmittel 8 festgelegt ist.

Die Bewegung des Muffeninnenkörpers 3, der Druckhülse 4 und des Ventilstößels 5 aus der Kuppelstellung in Richtung der Öffnungsstellung erfolgt durch einen an das Kupplungselement 1 angelegten und im Strömungskanal 6 wirkenden Druck eines Druckmittels. Das Druckmittel bewirkt folglich, dass die Druckhülse 4 zumindest teilweise in den Kupplungsstecker 7 hinein gedrängt wird. Dabei ist in der Öffnungsstellung gemäß Fig. 3 der Ventilstößel 11 des Kupplungssteckers 7 durch den Ventilstößel 5 des Kupplungselements 1 soweit zurückgedrückt, dass der Strömungskanal 9 freigegeben ist. Dadurch wird die durch einen Benutzer aufzubringende Kraft für den Kuppelvorgang vorteilhaft reduziert.

Die in Fig. 1 dargestellte Ausgangsstellung lässt sich ausgehend von der in Fig. 3 und Fig. 4 dargestellten Öffnungsstellung durch einen Entkuppelvorgang erreichen, indem gemäß Fig. 4 das Sperrmittel 8 durch Verschieben des Gehäuses 2 relativ zum Sperrmittel 8 wie in Fig. 4 dargestellt freigegeben wird, so dass der gekuppelte Kupplungsstecker 7 entfernbar ist. Gemäß Fig. 4 können die Sperrkugeln 8a des Sperrmittels 8 in neben dem Vorsprung 8b liegenden Rücksprung im Gehäuse 2, insbesondere in der Gehäusehülse 2c, ausweichen.

Durch das Entfernen des Kupplungssteckers 7 in Richtung R2 wird eine Bewegung der Druckhülse 4 ebenfalls in die zweite Richtung R2 freigegeben, bis die Druckhülse 4 gemäß Fig. 1 wieder dichtend am Ventilstößel 5 anliegt und der Strömungskanal 6 vollständig verschlossen ist.

Gemäß den Fig. 1 bis 4 ist ein Muffenkörper 12 vorhanden, in dem, insbesondere an dessen Innenumfang, der Muffeninnenkörper 3 geführt und entlang der Kupplungsachse A bewegbar ist. Ferner ist ein zwischen Muffenkörper 12 und Muffeninnenkörper 3 wirkendes Rückstellmittel 13 in Form einer Spiralfeder vorgesehen, die in der in Fig. 2 dargestellten Kuppelstellung maximal komprimiert ist. Aus der Kuppelstellung bewirkt das Rückstellmittel 13 eine Kraft in Richtung R2, die das Eindringen in den Kupplungsstecker 7 zum Erreichen der Öffnungsstellung unterstützt.

Gemäß den Fig. 1 bis 4 weist das Verriegelungsmittel 10 eine Mehrzahl über den Umfang verteilter Verriegelungskugeln 14, mindestens eine den Muffenkörper 12 auf seinem Außenumfang umgebende Sperrhülse 15 sowie mindestens ein Federelement 16 auf. Das Federelement 16 wirkt zwischen der Sperrhülse 15 und einem Ansatz 17 an dem Muffenkörper 12. Das Federelement 16 drängt die Sperrhülse 15 stets, insbesondere in die erste Richtung R1, in Richtung bzw. gegen eine Anschlagfläche 18 des Gehäuses 2, insbesondere des Gehäusegrundkörpers 2a. Die Sperrhülse 15 weist eine erste Innenumfangsfläche 19 und eine zweite Innenumfangsfläche 20 auf, die jeweils einen unterschiedlichen Innendurchmesser aufweisen. In dem in Fig. 1 dargestellten Sperrzustand des Verriegelungsmittels 10 werden die Verriegelungskugeln 14 von der ersten Innenumfangsfläche 19 durch die Ausnehmungen 21 zumindest teilweise in den Muffenkörper 12 hinein gedrängt, so dass eine Bewegung des Muffeninnenkörpers 3 in die erste Richtung R1 innerhalb des Muffenkörpers 12 und relativ zum Muffenkörper 12 durch die Verriegelungskugeln 14 blockiert wird.

Wird nun - ausgehend von der Ausgangsstellung in Fig. 1. - parallel zur Kupplungsachse A eine Kraft auf den Ventilstößel 5, die Druckhülse 4 und damit auch auf den Muffeninnenkörper 3 bewirkt, beispielsweise durch einen Kupplungsstecker 7, werden diese Bauteile zusammen mit dem Muffenkörper 12 in die erste Richtung R1 bewegt. Dabei gleiten die Verriegelungskugeln 14 an der ersten Innenumfangsfläche 19 entlang, bis sie in Richtung der auf einem größeren Durchmesser liegenden zweiten Innenumfangsfläche 20 ausweichen können, wodurch eine Bewegung des Muffeninnenkörpers 3 relativ zum Muffengrundkörper 12 freigegeben wird. Dadurch kann der Muffeninnenkörper 3 tiefer in den Muffengrundkörper 12 eintauchen, wodurch das Rückstellmittel 13 komprimiert wird (siehe Fig. 2).

Ausgehend von der Kuppelstellung gemäß Fig. 2 erfolgt bei einer Bewegung des Muffenkörpers 12 sowie des Muffeninnenkörpers 3 in die zweite Richtung R2 zunächst eine Komprimierung des Federelements 16 durch die von den Verrieglungskugeln 14 ausgehende Kraft auf die Sperrhülse 15. Sobald der Muffeninnenkörper 3 in seiner Öffnungsstellung gemäß Fig. 3 eine Bewegung der Verriegelungskugeln 14 zumindest teilweise in das Innere des Muffenkörpers 12 erlaubt, werden die Verriegelungskugeln 14 unter der Wirkung der Feder 16 durch die Sperrhülse 15 in das Innere des Muffenkörpers 12 gedrängt, wodurch wieder der Sperrzustand gemäß Fig. 1 und Fig. 4 erreicht wird.

Mit dem Muffenkörper 12 ist ein Muffengrundkörper 22 fest verbunden, wobei der Muffengrundkörper 22 auf den Muffenkörper 12 aufgeschraubt ist. Der Muffenkörper 12 und der Muffengrundkörper 22 bewegen sich folglich gleichzeitig miteinander. Der Muffengrundkörper 22 wirkt mit dem Sperrmittel 8 für den Kupplungsstecker 7 zusammen. Die Sperrkugeln 8a durchtreten den Muffengrundkörper 22 teilweise und werden von dem Muffengrundkörper 22 gehalten werden. Durch die Sperrkugeln 8a in ihrer Sperrstellung gemäß Fig. 3 wird der Kupplungsstecker 7 in Bezug auf den Muffengrundkörper 22 und damit auch in Bezug auf den Muffenkörper 12 starr festgelegt.

Fig. 1 zeigt ebenfalls eine Sperrstellung des Sperrmittels 8, nämlich dass eine Bewegung eines Kolbens 24 in die erste Richtung R1 durch die Sperrkugeln 8a zunächst nur gemeinsam mit dem Muffengrundkörper 22 möglich ist. Ein Kuppeln erfolgt somit derart, dass der Kolben 24 und der Muffengrundkörper 22 über die Sperrkugeln 8a gemeinsam bewegt werden, bis eine Ausweichbewegung der Sperrkugeln 8a in einen neben dem Vorsprung 8b liegenden Rücksprung in der zweiten Gehäusehülse 2c möglich ist.

Ferner ist ein Muffenrückstellmittel 23 innerhalb des Gehäuses 2 vorgesehen, das sich sowohl an der ersten Gehäusehülse 2b als auch an der zweiten Gehäusehülse 2c und, je nachdem in welche der Richtungen R1, R2 der Muffenkörper 12 und der Muffengrundkörper 22 ausgelenkt werden, jeweils am Muffenkörper 12 (Fig. 4) oder am Muffengrundkörper 22 (Fig. 2) abstützt.

Gemäß Fig. 2 stützt sich das Muffenrückstellmittel 23 an der ersten Gehäusehülse 2b sowie am Muffengrundkörper 22 ab. Während des Entkuppelns gemäß Fig. 4 stützt sich das Muffenrückstellmittel 23 an der zweiten Gehäusehülse 2c sowie an dem Absatz 17 des Muffenkörpers 12 ab. Das Muffenrückstellmittel 23 sorgt dafür, dass der Muffenkörper 12 und der Muffengrundkörper 22 nach einer, durch die von dem Kupplungsstecker 7 ausgehenden Kraft, erfolgten Auslenkung in die Richtung R1, durch eine Bewegung wieder in Richtung R2 in eine neutrale Ausgangslage zurückgestellt werden. Beim Entfernen des Kupplungssteckers 7 wird eine Bewegung des Muffenkörpers 12 und des Muffengrundkörpers 22 in Richtung R2 bedingt, aus der das Muffenrückstellmittel 23 wieder eine Rückstellung in Richtung R1 in die neutrale Ausgangslage gemäß Fig. 1 und Fig. 3 bewirkt.

Gemäß den Fig. 1 bis 4 weist das Kupplungselement 1 ferner den Kolben 24, der die Druckhülse 4 umgibt. Zwischen Kolben 24 und Druckhülse 4 ist eine Dichtung 25 angeordnet. Der Kolben 24 verschließt in der Ausgangsstellung gemäß Fig. 1 die Verbindungsschnittstelle 26 des Kupplungselements 1 zumindest teilweise. Zudem ist an der Verbindungsschnittstelle 26 eine Abstreifverdichtung 27 vorgesehen, die im Ausgangszustand gemäß Fig. 1 am Kolben 24 anliegt und den Eintritt von Schmutz in das Kupplungselement 1 verhindert.

Entlang der Kupplungsachse A betrachtet ist zwischen Muffengrundkörper 22 und Muffenkörper 12 eine Stützhülse 28 eingespannt, die als Lager für eine zwischen Kolben 24 und Stützhülse 28 angeordnete Kolbenfeder 29 dient. Dadurch dass sich die Kolbenfeder 29 an der Stützhülse 28 abstützt, wird die Kraft auf den Muffeninnenkörper 3 ausgehend von der Kolbenfeder 29 reduziert, so dass aus der Kuppelstellung gemäß Fig. 2 höhere Kräfte zum Öffnen des Kupplungssteckers 7 aufbringbar sind.

Der Kolben 24 wird zusammen mit dem Ventilstößel 5, und der Druckhülse 4 von einem Kupplungsstecker 7 während des Kuppelvorgangs in die erste Richtung R1 gedrängt - siehe Fig. 2. Dabei wird die Kolbenfeder 29 komprimiert. In der Öffnungsstellung gemäß Fig. 3 ist der Kolben 24 weiterhin durch den Kupplungsstecker 7 innerhalb des Gehäuses 2 gehalten, wobei der Kolben 24 als Anschlag für die Druckhülse 4 dient, um die Druckhülse 4 in der Anschlagsstellung festzulegen.

Erfolgt nun ein Entkuppeln, wird der Kupplungsstecker 7 - nach der Freigabe durch eine Relativbewegung des Gehäuses 2 zu dem Sperrkugeln 8 - gemäß Fig. 4 in Richtung R2 aus dem Kupplungselement 1 entfernt, wodurch der Kolben 24 durch seine Kolbenfeder 29 in Richtung der Ausgangsstellung gemäß Fig. 1 gedrängt wird. Gleichzeitig gibt der Kolben 24 dadurch eine Bewegung der Druckhülse 4 in Richtung ihrer Ausgangsstellung gemäß Fig. 1 frei, so dass der Strömungskanal 6 durch die Druckhülse 4 und den Ventilstößel 5 gemäß Fig. 1 verschlossen werden kann.

Die Druckhülse 4 weist einen Druckhülsenansatz 30 auf, der auf die Druckhülse 4 aufgeschraubt ist. Zwischen dem Druckhülsenansatz 30 und dem Muffeninnenkörper 3 ist ein Rückstellmittel 31 in Form einer Spiralfeder angeordnet. Durch den Druckhülsenansatz 30 drängt das Rückstellmittel 31 die Druckhülse 4 stets in die zweite Richtung R2.

Der Ventilstößel 5 ist mittels einer Stößelführung 32 zentral innerhalb des Strömungskanals 6 gehalten, wobei die Stößelführung 32 formschlüssig innerhalb des Muffeninnenkörpers 3 gehalten und mittels einer eingeschraubten Spannhülse 33 fixiert ist. Der Ventilstößel 5 bewegt sich folglich immer gleichzeitig mit dem Muffeninnenkörper 3.

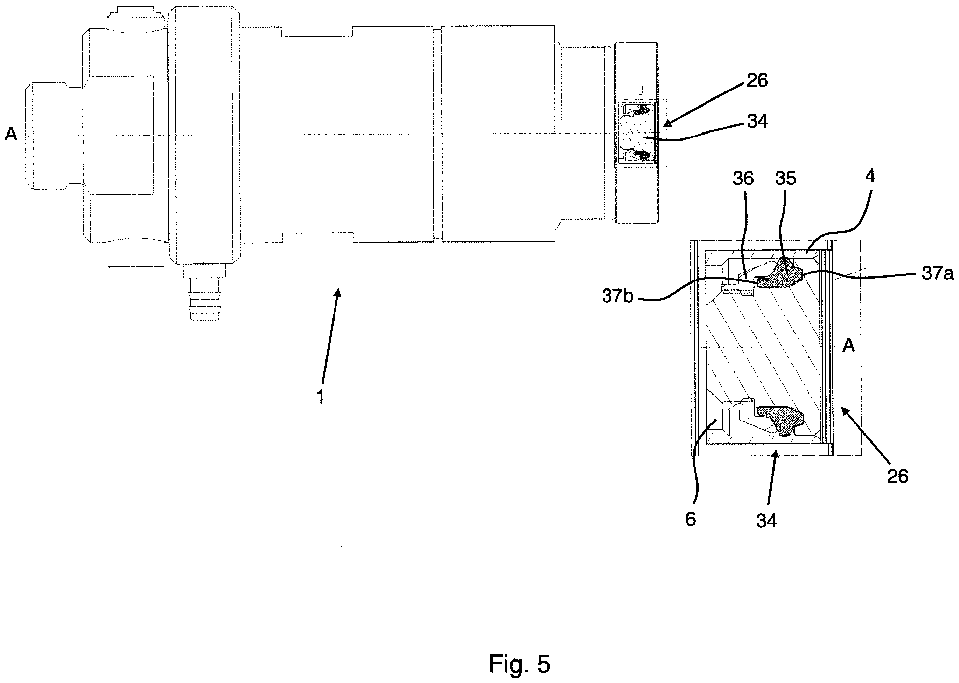

Beim Kuppelvorgang, also beim Einkuppeln, werden folglich durch die von einem Kupplungsstecker 7 ausgehende Kraft zunächst der Kolben 24 und der Muffengrundkörper 22 und damit auch der Muffenkörper 12 sowie der Muffeninnenkörper 3, der Ventilstößel 5 und die Druckhülse 4 in Richtung R1 in das Innere des Gehäuses 2 bewegt. Ab der Stellung zwischen Gehäuse 2 und Sperrkugeln 8a, ab der die Sperrkugeln 8a in Richtung des Gehäuses 2 ausweichen können, werden - auch nach einer Freigabe durch das Verriegelungsmittel 10 - der Kolben 24, die Druckhülse 4, der Ventilstößel 5 sowie der Muffeninnenkörper 3 weiter in das Gehäuse 2, insbesondere in den Muffenkörper 12, hinein geschoben, bis der Kupplungsstecker 7 mit dem Sperrmittel 8 an dem Gehäuse 2 festlegbar ist. Nach dem Befestigen des Kupplungssteckers 7, währenddessen der Muffenkörper 12 und der Muffengrundkörper 22 von dem Muffenrückstellmittel 23 in ihre Neutralstellung verschoben worden sind, werden der Muffeninnenkörper 3, der Ventilstößel 5 und die Druckhülse 4 durch das Druckmittel in Richtung des Kupplungssteckers 7 - in die zweite Richtung R2 - verschoben. Die Druckhülse 4 dringt dabei in den Kupplungsstecker 7 ein, bis sie an dem Kolben 24 anliegt. Nur der Muffeninnenkörper 3 mit dem Ventilstößel 5 werden weiter bewegt, bis ein Strömungsquerschnitt 9 geöffnet ist und das Verriegelungsmittel 10 in seine Verriegelungsstellung gelangt, so dass der Muffeninnenkörper 3 nicht mehr relativ zum Muffenkörper 12 verschiebbar ist. Gemäß den Fig. 1 bis Fig. 4 und Fig. 5 weist der Ventilstößel 5 einen Ventilstößelkopf 34 auf, an dem eine Dichtung 35 angeordnet ist. Die Dichtung 35 wird von einer Kammerungshülse 36 an dem Ventilstößelkopf 34 gehalten, indem die Kammerungshülse 36 an dem Ventilstößelkopf 34 aufgeschraubt ist. Die Dichtung 35 weist einen im Wesentlichen T-förmigen Querschnitt auf und ist in einer ersten Aufnahmenut 37a im Ventilstößelkopf 34 und einer zwischen Kammerungshülse 36 und Ventilstößelkopf 34 gebildeten, zweiten Aufnahmenut 37b gehalten. Die Kammerungshülse 36 übergreift die Dichtung 35 zur Bildung der zweiten Aufnahmenut 37b wie die Aufnahmenut 37a, so dass die Dichtung 35 zuverlässig auch bei hohen Strömungsgeschwindigkeiten an dem Ventilstößelkopf 34 gehalten ist. Die Dichtung 35 ist zwischen der ersten Aufnahmenut 37a und der zweiten Aufnahmenut 37b der Kammerungshülse 36 in Richtung der Kupplungsachse A eingespannt. Die Dichtung 35 liegt ausgehend von der Kupplungsachse A in radialer Richtung an der Druckhülse 4 an und dichtet somit zwischen Ventilstößelkopf 34 und der Druckhülse 4 den Strömungskanal 6 ab.

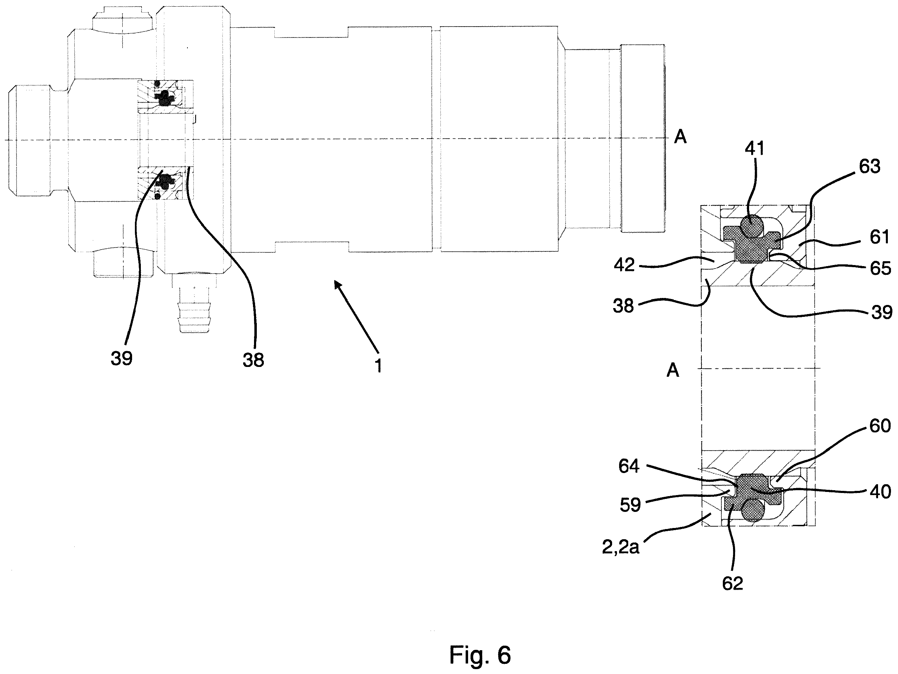

Gemäß den Fig. 1 bis Fig. 4 und Fig. 6 weist der Muffenkörper 12 einen im Wesentlichen zylindrischen Ansatzabschnitt 38 auf, wobei der Ansatzabschnitt 38 eine lokale Durchmessererweiterung 39 aufweist. Die lokale Durchmessererweiterung 39 zeichnet sich dadurch aus, dass der Durchmesser des zylindrischen Ansatzabschnitts 38 vor und hinter der lokalen Durchmessererweiterung 39 kleiner ist als der Durchmesser der Durchmessererweiterung 39. Zwischen Ansatzabschnitt 38 und Durchmessererweiterung 39 ist vorzugsweise beidseitig ein Übergangsbereich mit einem Flankenwinkel zwischen 20° und 30° zur Kupplungsachse A ausgebildet, insbesondere 25. Fig. 6 zeigt die Ausgangsstellung gemäß Fig. 1, in der die Durchmessererweiterung 39 dichtend mit einer Dichtung 40 zusammenwirkt. Die Dichtung 40 wirkt in radialer Richtung auf die Kupplungsachse A hin und ist mittels eines O-Rings 41 in radialer Richtung vorgespannt. Beim Kuppeln gemäß Fig. 2 und beim Entkuppeln gemäß Fig. 4 wird der Muffenkörper 12 und damit der zylindrische Ansatzabschnitt 38 derart entlang der Kupplungsachse A verschoben, dass zwischen der Durchmessererweiterung 38 und der Dichtung 40 ein Ringspalt 42a gemäß Fig. 2 bzw. ein Ringspalt 42b gemäß Fig. 4 ausgebildet ist, durch den ein Druckmittel in einen Ringraum 43 abführbar ist. Durch diese Druckentlastung wird der Kuppelvorgang und der Entkuppelvorgang vereinfacht, da das Druckmittel aus dem Volumen des Kupplungselements 1 entweichen kann.

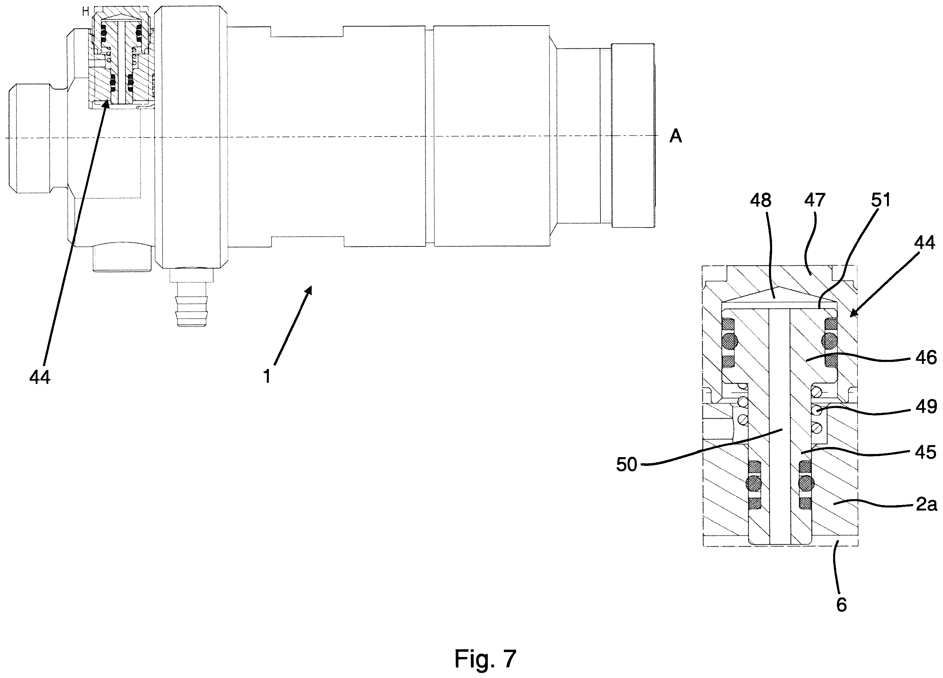

Das Kupplungselement 1 weist ferner gemäß den Fig. 1 bis Fig. 4 und der Fig. 7 ein Blockiermittel 44 auf, mit dem eine Bewegung des Muffenkörpers 12 innerhalb des Gehäuses 2 so begrenzbar ist, dass ein Kuppeln des Kupplungselements 1 durch das Blockiermittel 44 verhindert wird. Fig. 1, Fig. 2 und Fig. 4 zeigen das Blockiermittel 44 in der Freigabestellung, Fig. 3 zeigt das Blockiermittel 44 in seiner Sperrstellung, in der eine Bewegung des Muffenkörpers 12 in die erste Richtung R1 begrenzt wird. Das Blockiermittel 44 weist einen Stößel 45 mit einem Stößelkopf 46 sowie einen durch eine Kappe 47 gebildeten Druckraum 48 auf. Zudem ist ein Federelement 49 und ein den Stößel 45 zentral durchtretender Durchtrittskanal 50 vorgesehen.

Der Durchtrittskanal 50 und damit auch der Druckraum 48 stehen mit dem Strömungskanal 6 in Verbindung, so dass das Druckmittel durch den Durchtrittskanal 50 in den Druckraum 48 gelangen kann. Die Feder 49 drängt den Stößel 45 stets in seine Freigabeposition. Steigt nun der Druck im Strömungskanal 6 und damit auch der Druck im Druckraum 48, insbesondere auf die ringförmige Stirnfläche 51 des Stößels 45, wird dieser ab einem bestimmten Druckschwellenwert in seine Sperrstellung gemäß Fig. 3, also in Richtung des Strömungskanals 6 gedrängt. Erst wenn die Kraft der Feder 49 größer als die aus Druck auf die Stirnfläche 51 resultierende Kraft ist, bewegt sich der Stößel 45 wieder in seine Freigabeposition. Dadurch kann mit dem Blockiermittel 44 ein Einkuppeln druckabhängig, also in Abhängigkeit von einem Druckschwellenwert, zuverlässig verhindert werden.

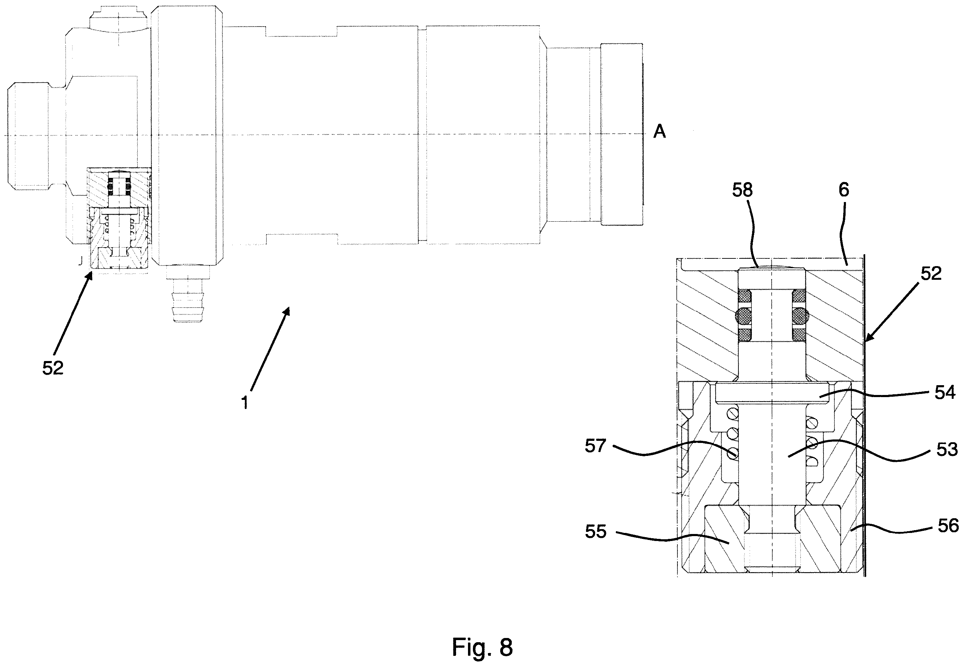

Ferner weist das Kupplungselement 1 gemäß Fig. 1 bis Fig. 4 und Fig. 8 ein Anzeigemittel 52 auf. Mit dem Anzeigemittel 52 ist ein Druckzustand innerhalb des Gehäuses 2 anzeigbar, insbesondere das Überschreiten eines bestimmten Druckschwellenwertes anzeigbar. Das Anzeigemittel 52 weist einen Anzeigestößel 53 mit einem Ringkragen 54 und einem Signalkopf 55 auf. Zwischen einer Kappe 56 und dem Ringkragen 54 wirkt ein Federelement 57, dass den Anzeigestößel 53 in seine neutrale Position gemäß Fig. 8 drängt. Steigt nun der Druck innerhalb des Strömungskanals 6 über einen vorab festgelegten Druckschwellenwert, nämlich der Druck auf die Stirnfläche 58 des Anzeigestößels 53 so, dass die Federkraft der Feder 57 überschritten wird, wird der Anzeigestößel 53 aus seiner neutralen Position gemäß Fig. 8 in eine Anzeigeposition gedrängt, bei der der Signalkopf 55 aus der Kappe 56 herausragt und damit das Überschreiten eines zum Kuppeln geeigneten Druckschwellenwerts anzeigt. Fig. 1, 2 und 4 zeigen den Neutralzustand des Anzeigemittels 52, wobei Fig. 3 den Anzeigezustand zeigt, bei dem der Signalkopf 55 aus der Kappe 56 herausgetreten ist.

Gemäß Fig. 6 ist die Dichtung 40 zwischen einer ersten Halteflanke 59 des Gehäuses 2, insbesondere des Gehäusegrundkörpers 2a, und einer zweiten Halteflanke 60 eines Spannelements 61 gehalten. Das Spannelement 61 ist dazu mit dem Gehäuse 2 verschraubt. Die Halteflanke 59 ist auf einem größeren Durchmesser angeordnet, als die Halteflanke 60. Die Dichtung 40 weist einen im Wesentlichen T-förmigen Querschnitt mit einem ersten Haltekragen 62 und einem zweiten Haltekragen 63 auf. Der erste Haltekragen 62 wird von der ersten Halteflanke 59 und der zweite Haltekragen 63 von der zweiten Halteflanke 60, insbesondere parallel zur Kupplungsachse A, übergriffen, so dass die Dichtung 40 zuverlässig in dem Gehäuse 2 gehalten ist.

Aufgrund der speziellen Strömungsverhältnisse bei der Öffnung des Ringspalts 42a, 42b ist die Dichtung 40 so gestaltet, dass eine von dem ersten Haltekragen 62 ausgehende erste Seitenflanke 64 eine größere radiale Höhe aufweist als eine von dem zweiten Haltekragen 63 ausgehende zweite Seitenflanke 65. Dazu weist folglich die zweite Halteflanke 60 einen geringeren radialen Abstand zur Kupplungsachse A auf als die erste Halteflanke 59. Durch eine derartige Geometrie der Dichtung 40 und der ersten Halteflanke 59 bzw. der zweiten Halteflanke 60 ist die Dichtung 40 zuverlässig bei jeglichen Strömungssituationen an dem Gehäuse 2 gehalten. Die erste Halteflanke 59 und die zweite Halteflanke 60 stützen die Dichtung 40 zuverlässig bei parallel zur Kupplungsachse A auftretenden Kräften ab.

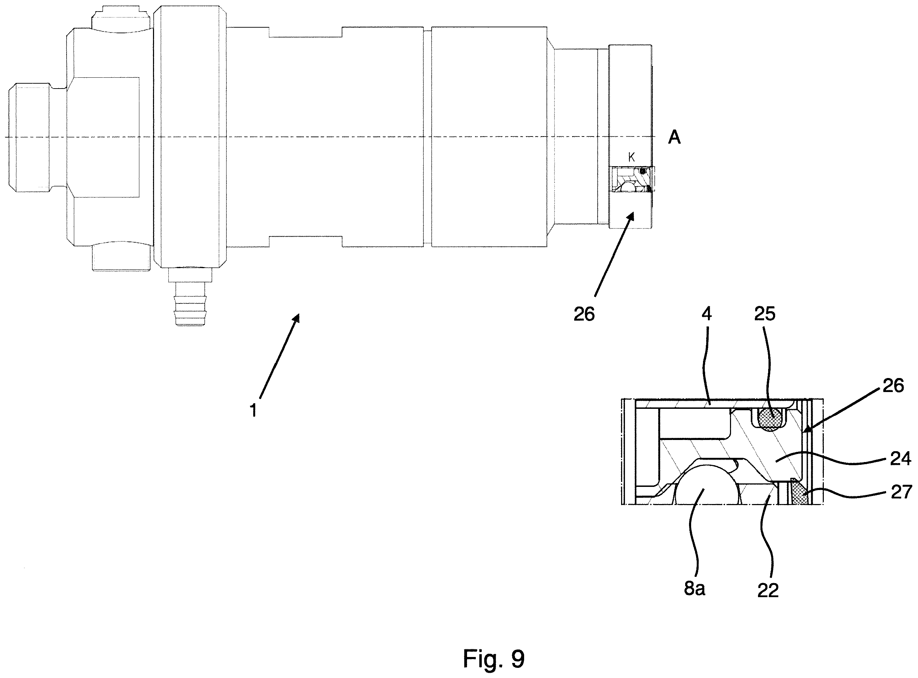

Fig. 9 zeigt ein Ausführungsbeispiel eines Kupplungselements 1 mit einer Detailansicht einer Abstreiferdichtung 27. Die Abstreiferdichtung 27 ist im Randbereich zwischen dem Gehäuseabschlusselement 2d und der zweiten Gehäusehülse 2c eingespannt und erstreckt sich flächig in radialer Richtung auf die Kupplungsachse A zu. Die Abstreiferdichtung 27 erstreckt sich soweit, dass sie in der Ausgangsstellung (gemäß Fig. 1) den Muffengrundkörper 22 an der Verbindungsschnittstelle 26 überdeckt und radial an einem Außenumfang des Kolbens 24 anliegt.

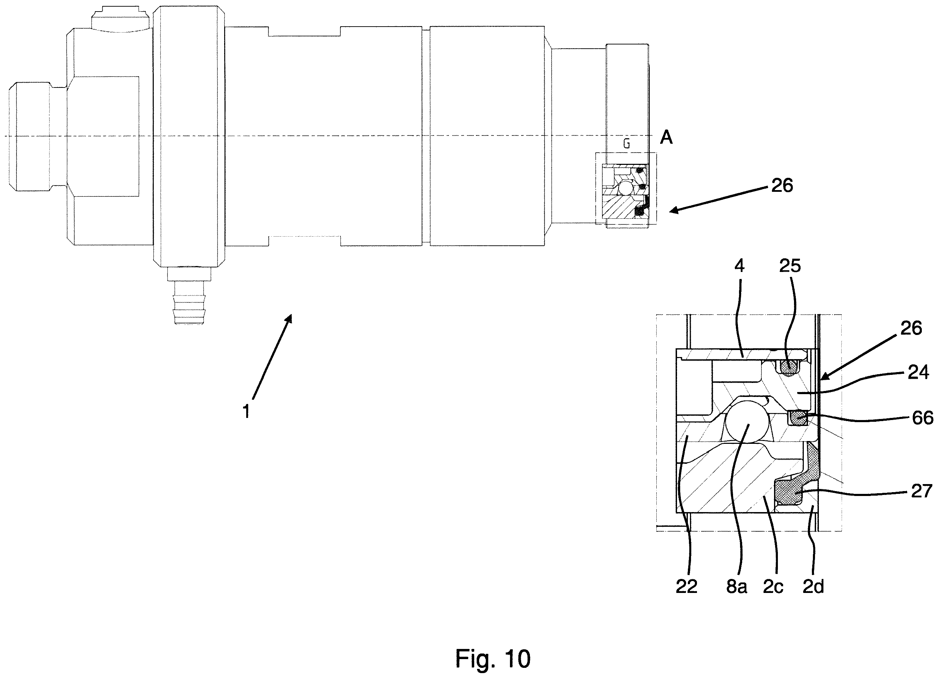

Fig. 10 zeigt ein Ausführungsbeispiel eines Kupplungselements 1 mit einem weiteren Ausführungsbeispiel einer Abstreiferdichtung 27 an der Verbindungsschnittstelle 26. Die Abstreiferdichtung 27 ist mit einem erweiterten Klemmbereich, der vorzugsweise einen im Wesentlichen rechteckigen Querschnitt aufweist, zwischen zweiter Gehäusehülse 2c und dem Gehäuseabschlusselement 2d eingeklemmt. Ausgehend von dem Klemmbereich erstreckt sich die Abstreiferdichtung zunächst geneigt in Richtung der Verbindungsschnittstelle 26, um sich an der Verbindungsschnittstelle 26 radial in Richtung der Kupplungsachse A zu erstrecken. Die Abstreiferdichtung 27 ist so ausgebildet, dass sie sich in der Ausgangsstellung soweit radial erstreckt, dass die Abstreiferdichtung 27 an einem Außenumfang des Muffengrundkörpers 22 anliegt. Zwischen Muffengrundkörper 22 und Kolben 24 ist eine weitere Abstreiferdichtung 66 in Form eines O-Rings vorgesehen.

## Patentansprüche

1. Kupplungselement (1), insbesondere Kupplungsmuffe, für eine Hydraulickupplung an einer Druckmittelleitung, mit einem Gehäuse (2), einem Muffeninnenkörper (3), einer Druckhülse (4) und einem Ventilstößel (5), wobei das Gehäuse (2) mindestens einen Strömungskanal (6) für ein Druckmittel und eine Kupplungsachse A aufweist, wobei der Muffeninnenkörper (3), die Druckhülse (4) und der Ventilstößel (5) innerhalb des Gehäuses (2) entlang der Kupplungsachse A verschiebbar gehalten sind, wobei zumindest der Muffeninnenkörper (3), die Druckhülse (4) und der Ventilstößel (5) während eines Kuppelvorgangs aus einer Ausgangsstellung entlang der Kupplungsachse (A) in eine erste Richtung (R1) in das Gehäuse (2) hinein in eine Kuppelstellung verschiebbar sind, wobei in der Kuppelstellung ein Kupplungsstecker (7) mittels eines Sperrmittels (8) an dem Kupplungselement (1) festlegbar ist, dass zumindest der Muffeninnenkörper (3), die Druckhülse (4) und der Ventilstößel (5) aus der Kupplungsstellung in eine der ersten Richtung (R1) entgegengesetzte zweite Richtung (R2) entlang der Kupplungsachse A bis in eine Anschlagstellung verschiebbar ist, wobei in der Anschlagstellung eine weitere Bewegung zumindest der Druckhülse (4) in die zweite Richtung (R2) blockiert ist, wobei der Muffeninnenkörper (3) und der Ventilstößel (4) weiter in die zweite Richtung (R2) bis in eine Öffnungsstellung bewegbar sind, wobei in der Öffnungsstellung ein Strömungsquerschnitt (9) zwischen Druckhülse (4) und Ventilstößel (5) freigegeben ist, **dadurch gekennzeichnet, dass** in der Öffnungsstellung ein Verriegelungsmittel (10) auf den Muffeninnenkörper (3) und den Ventilstößel (5) wirkt, wobei ein Muffenkörper (12) vorhanden ist, wobei der Muffeninnenkörper (3) in dem Muffenkörper (12) geführt ist, wobei zwischen Muffenkörper (12) und Muffeninnenkörper (3) ein Rückstellmittel in Form einer Feder angeordnet ist, wobei das Verriegelungsmittel (10) mindestens eine Verriegelungskugel (14), mindestens eine Sperrhülse (15) und mindestens ein Federelement (16) aufweist, und wobei das Verriegelungsmittel (10) zwischen Muffenkörper (12) und Muffeninnenkörper (3) wirkt.

2. Kupplungselement (1) nach Anspruch 1,**dadurch gekennzeichnet, dass** die Ausgangsstellung ausgehend von der Öffnungsstellung durch einen Entkuppelvorgang erreichbar ist, indem das Sperrmittel (8) durch Verschieben zumindest eines Teils des Gehäuses (2) relativ zum Sperrmittel (8) freigegeben wird, so dass ein gekuppelter Kupplungsstecker (7) entfernbar ist, und dass durch das Entfernen des Kupplungssteckers (7) eine Bewegung der Druckhülse (4) in die zweite Richtung freigegeben wird, bis die Druckhülse dichtend am Ventilstößel (5) anliegt.

3. Kupplungselement (1) nach Anspruch 1 oder 2, **dadurch gekennzeichnet, dass** ein Muffengrundkörper (22) vorhanden ist, dass der Muffengrundkörper (22) mit dem Muffenkörper (12) verbunden ist, insbesondere dass ein Muffenrückstellmittel (23) vorhanden ist, und dass das Muffenrückstellmittel (23) zwischen Muffenkörper (12) und Gehäuse (2) und/oder zwischen Muffengrundkörper (22) und Gehäuse (2) wirkt.

4. Kupplungselement (1) nach einem der Ansprüche 1 bis 3, **dadurch gekennzeichnet, dass** mindestens ein Kolben (24) vorhanden ist, dass der Kolben (24) die Druckhülse (4) umgibt, und dass der Kolben (24) in der Ausgangsstellung die Verbindungsschnittstelle (26) des Kupplungselements (1) zumindest teilweise verschließt, bevorzugt dass an der Verbindungsschnittstelle (26) eine Abstreiferdichtung (27) angeordnet ist, insbesondere dass die Abstreiferdichtung (27) zumindest in der Ausgangsstellung an dem Kolben (24) anliegt oder dass die Abstreiferdichtung (27) zumindest in der Ausgangsstellung an dem Muffengrundkörper (22) anliegt.

5. Kupplungselement (1) nach Ansprüchen 3 und 4, **dadurch gekennzeichnet, dass** in Richtung der Kupplungsachse (A) betrachtet, eine Stützhülse (28) zwischen Muffengrundkörper (22) und Muffenkörper (12) angeordnet ist, und dass die Stützhülse (28) als Lager für eine zwischen Kolben (24) und Stützhülse (28) angeordnete Kolbenfeder (29) dient.

6. Kupplungselement (1) nach einem der Ansprüche 1 bis 5, **dadurch gekennzeichnet, dass** die Druckhülse (4) einen Druckhülsenansatz (30) aufweist, und dass zwischen Druckhülsenansatz (30) und Muffeninnenkörper (3) ein Rückstellmittel (31) angeordnet ist, insbesondere dass der Druckhülsenansatz (30) auf die Druckhülse (4) aufgeschraubt ist.

7. Kupplungselement (1) nach einem der Ansprüche 1 bis 6, **dadurch gekennzeichnet, dass** der Ventilstößel (5) mittels einer Stößelführung (32) innerhalb des Muffeninnenkörpers (3) gehalten ist, insbesondere mittels einer eingeschraubten Spannhülse (33) eingeklemmt ist.

8. Kupplungselement (1) nach einem der Ansprüche 1 bis 7, **dadurch gekennzeichnet, dass** der Ventilstößel (5) an seinem Ventilstößelkopf (34) eine Dichtung (35) aufweist, und dass die Dichtung (35) zumindest teilweise von einer Kammerungshülse (36) gehalten ist, und dass die Kammerungshülse (36) die Dichtung (35) zumindest teilweise übergreift.

9. Kupplungselement (1) nach Anspruch 8, **dadurch gekennzeichnet, dass** die Dichtung (35) einen T-förmigen oder kreuzförmigen Querschnitt aufweist, insbesondere dass die Dichtung (35) zwischen einer ersten Aufnahmenut (37a) in dem Ventilstößelkopf (34) und einer zweiten Aufnahmenut (37b) der Kammerungshülse (36) gehalten ist.

10. Kupplungselement (1) nach einem der Ansprüche 1 bis 9, **dadurch gekennzeichnet, dass** der Muffenkörper (12) einen zylindrischen Ansatzabschnitt (38) aufweist, dass ein Spalt (42) zwischen Gehäuse (2) und Ansatzabschnitt (38) im ungekuppelten und im gekuppelten Zustand des Kupplungselements (1) mit einem Dichtmittel dichtend verschlossen ist, und dass der Muffenkörper (12) zumindest während des Kuppelns und des Entkuppelns derart entlang der Kupplungsachse (A) verschoben ist, dass ein Strömungsquerschnitt zum Abführen von Druckmittel, insbesondere in einem Ringraum (43), ausgebildet ist.

11. Kupplungselement (1) nach Anspruch 10, **dadurch gekennzeichnet, dass** der Ansatzabschnitt (38) mindestens eine lokale Durchmessererweiterung (39) aufweist, dass die Durchmessererweiterung (39) im ungekuppelten und im gekuppelten Zustand des Kupplungselements (1) mit mindestens einer Dichtung (40) dichtend zusammenwirkt, und dass der Muffenkörper (12) zumindest während des Kuppelns und des Entkuppelns derart entlang der Kupplungsachse (A) verschoben ist, dass zwischen der Durchmesserweiterung (39) und der Dichtung (40) ein Ringspalt (42a, 42b) zum Abführen von Druckmittel, insbesondere in einem Ringraum (43) ausgebildet ist.

12. Kupplungselement (1) nach einem der Ansprüche 1 bis 11, **dadurch gekennzeichnet, dass** ein Blockiermittel (44) vorhanden ist, und dass mit dem Blockiermittel (44) eine Bewegung des Muffeninnenkörpers (3) und/oder des Muffenkörpers (12) innerhalb des Gehäuses (2) begrenzbar ist, und dass durch die Begrenzung ein Kuppeln des Kupplungselements (1) verhindert wird.

13. Kupplungselement (1) nach Anspruch 12, **dadurch gekennzeichnet, dass** mit dem Blockiermittel (44) eine Bewegung in Abhängigkeit von dem in dem Kupplungselement (1) anliegenden Druck des Druckmittels begrenzbar ist, insbesondere ab einem vorbestimmten Druckschwellenwert begrenzt wird.

14. Kupplungselement (1) nach einem der Ansprüche 1 bis 13, **dadurch gekennzeichnet, dass** ein Anzeigemittel (52) vorhanden ist, und dass mit dem Anzeigemittel (52) ein Druckzustand innerhalb des Gehäuses (2) anzeigbar ist, wodurch ein Kuppeln des Kupplungselements (1) bei vorbestimmten Druckzuständen durch Anzeige verhinderbar ist.

## Claims

1. Coupling element (1), in particular coupling sleeve, for a hydraulic coupling on a pressure medium line, with a housing (2), a sleeve inner body (3), a pressure sleeve (4) and a valve tappet (5), wherein the housing (2) has at least one flow channel (6) for a pressure medium and a coupling axis A, wherein the sleeve inner body (3), the pressure sleeve (4) and the valve tappet (5) are held so as to be displaceable along the coupling axis A within the housing (2), wherein at least the sleeve inner body (3), the pressure sleeve (4) and the valve tappet (5) can be displaced during a coupling process from an initial position along the coupling axis (A) in a first direction (R1) into the housing (2) into a coupling position, wherein, in the coupling position, a coupling plug (7) is fixable to the coupling element (1) by means of a locking means (8), wherein at least the sleeve inner body (3), the pressure sleeve (4) and the valve tappet (5) can be displaced from the coupling position in a second direction (R2) opposite the first direction (R1) along the coupling axis A into a stop position, wherein, in the stop position, a further movement at least of the pressure sleeve (4) is blocked in the second direction (R2), wherein the sleeve inner body (3) and the valve tappet (5) can be moved further in the second direction (R2) into an open position, wherein, in the open position, a flow cross-section (9) is released between pressure sleeve (4) and valve tappet (5), **characterised in that**, in the open position, an interlocking means (10) acts on the sleeve inner body (3) and the valve tappet (5), wherein a sleeve body (12) is provided, wherein the sleeve inner body (3) is guided in the sleeve body (12), wherein a return means in the form of a spring is arranged between sleeve body (12) and sleeve inner body (3), wherein the locking means (10) has at least one locking ball (14), at least one locking sleeve (15) and at least one spring element (16) and wherein the locking means (10) acts between sleeve body (12) and sleeve inner body (3).

2. Coupling element (1) according to claim 1, **characterised in that** the initial position, starting from the open position, can be reached by an uncoupling process **in that** the locking means (8) is released by displacing at least one part of the housing (2) relative to the locking means (8), so that a coupled coupling plug (7) can be removed and that by removing the coupling plug (7) a movement of the pressure sleeve (4) in the second direction is released until the pressure sleeve sealingly abuts against the valve tappet (5).

3. Coupling element (1) according to claim 1 or 2, **characterised in that** a sleeve base body (22) is provided, that the sleeve base body (22) is connected to the sleeve body (12), in particular that a sleeve return means (23) is provided and that the sleeve return means (23) acts between sleeve body (12) and housing (2) and/or between sleeve base body (22) and housing (2).

4. Coupling element (1) according to one of claims 1 to 3, **characterised in that** at least one piston (24) is provided, that the piston (24) surrounds the pressure sleeve (4) and that the piston (24), in the initial position, at least partially closes the connection interface (26) of the coupling element (1), preferably that a wiper seal (27) is arranged at the connection interface (26), in particular, that the wiper seal (27), at least in the initial position, abuts against the piston (24) or that the wiper seal (27), at least in the initial position, abuts against the sleeve base body (22).

5. Coupling element (1) according to claims 3 and 4, **characterised in that**, viewed in the direction of the coupling axis (A), a support sleeve (28) is arranged between sleeve base body (22) and sleeve body (12) and that the support sleeve (28) serves as a bearing for a piston spring (29) arranged between piston (24) and support sleeve (28).

6. Coupling element (1) according to one of claims 1 to 5, **characterised in that** the pressure sleeve (4) has a pressure sleeve extension (30) and that a return means (31) is arranged between pressure sleeve extension (30) and sleeve inner body (3), in particular that the pressure sleeve extension (30) is screwed onto the pressure sleeve (4).

7. Coupling element (1) according to one of claims 1 to 6, **characterised in that** the valve tappet (5) is held by means of a tappet guide (32) within the sleeve inner body (3), in particular is clamped in by means of a screwed-in clamping sleeve (33).

8. Coupling element (1) according to one of claims 1 to 7, **characterised in that** the valve tappet (5) has a seal (35) on its valve tappet head (34) and that the seal (35) is at least partially held by a chambering sleeve (36) and that the chambering sleeve (36) at least partially overlaps the seal (35).

9. Coupling element (1) according to claim 8, **characterised in that** the seal (35) has a T-shaped or cross-shaped cross-section, in particular that the seal (35) is held between a first receiving groove (37a) in the valve tappet head (34) and a second receiving groove (37b) of the chambering sleeve (36).

10. Coupling element (1) according to one of claims 1 to 9, **characterised in that** the sleeve body (12) has a cylindrical shoulder section (38), that a gap (42) between housing (2) and shoulder section (38) is sealingly closed with a sealing means in the uncoupled and in the coupled state of the coupling element (1), and that the sleeve body (12), at least during the coupling and uncoupling, is displaced along the coupling axis (A) in such a manner that a flow cross-section for the discharge of pressure medium, in particular in an annular space (43), is formed.

11. Coupling element (1) according to claim 10, **characterised in that** the shoulder section (38) has at least one local diameter extension (39), that the diameter extension (39), in the uncoupled and in the coupled state of the coupling element (1), sealingly interacts with at least one seal (40) and that the sleeve body (12), at least during coupling and uncoupling, is displaced along the coupling axis (A) in such a manner that, between the diameter extension (39) and the seal (40), an annular gap (42a, 42b) for the discharge of pressure medium, in particular in an annular space (43), is formed.

12. Coupling element (1) according to one of claims 1 to 11, **characterised in that** a blocking means (44) is provided and that a movement of the sleeve inner body (3) and/or of the sleeve body (12) within the housing (2) is limitable with the blocking means (44) and that coupling of the coupling element (1) is prevented by the limitation.

13. Coupling element (1) according to claim 12, **characterised in that** the blocking means (44) can be used to limit a movement as a function of the pressure of the pressure medium applied in the coupling element (1), in particular to limit it from a predetermined pressure threshold value.

14. Coupling element (1) according to one of claims 1 to 13, **characterised in that** an indicating means (52) is provided and that with the indicating means (52) a pressure condition within the housing (2) can be indicated, whereby a coupling of the coupling element (1) at predetermined pressure conditions can be prevented by indication.

## Revendications

1. Élément d'accouplement (1), notamment manchon d'accouplement pour un accouplement hydraulique contre une conduite de fluide sous pression, comprenant un boîtier (2), un corps intérieur (3) de manchon, une douille de compression (4) et un poussoir (5) de vanne, sachant que le boîtier (2) présente au moins un canal d'écoulement (6) pour un fluide sous pression et un axe d'accouplement A, sachant que le corps intérieur (3) de manchon, la douille de compression (4) et le poussoir (5) de vanne sont maintenus à l'intérieur du boîtier (2) pour coulisser le long de l'axe d'accouplement A, sachant qu'au moins le corps intérieur (3) de manchon, la douille de compression (4) et le poussoir (5) de vanne peuvent être déplacés, pendant une opération d'accouplement, depuis une position de départ le long de l'axe d'accouplement (A), dans une première direction (R1) les amenant à l'intérieur du boîtier (2) dans une position d'accouplement, sachant que dans la position d'accouplement un connecteur d'accouplement (7) est immobilisable contre l'élément d'accouplement (1) à l'aide d'un moyen de blocage (8), sachant qu'au moins le corps intérieur (3) de manchon, la douille de compression (4) et le poussoir (5) de vanne peuvent, dans une seconde direction (R2) opposée à la première direction (R1), être déplacés le long de l'axe d'accouplement A depuis la position d'accouplement jusque sur une position de butée, sachant que dans la position de butée une poursuite du mouvement au moins de la douille de compression (4) dans la seconde direction (R2) est bloquée, sachant que le corps intérieur (3) de manchon et le poussoir (5) de vanne peuvent continuer à être déplacés dans la seconde direction (R2) jusque sur une position ouverte, sachant que sur la position ouverte est libérée une section d'écoulement (9) entre la douille de compression (4) et le poussoir (5) de vanne, **caractérisé en ce que** sur la position ouverte un moyen de verrouillage (10) agit sur le corps intérieur (3) de manchon et le poussoir (5) de vanne, sachant qu'un corps (12) de manchon est présent, sachant que le corps intérieur (3) de manchon est guidé dans le corps (12) de manchon, sachant qu'entre le corps (12) de manchon et le corps intérieur (3) de manchon est disposé un moyen de rappel ayant la forme d'un ressort, sachant que le moyen de verrouillage (10) comprend au moins une bille de verrouillage (14), au moins une douille de blocage (15) et au moins un élément ressort (16), et sachant que le moyen de verrouillage (10) agit entre le corps de manchon (12) et le corps intérieur (3) de manchon.

2. Élément d'accouplement (1) selon la revendication 1, **caractérisé en ce que** la position de départ peut être atteinte par une opération de découplage en partant de la position ouverte, par un déblocage du moyen de blocage (8) sous l'effet du déplacement d'au moins une partie du boîtier (2) relativement au moyen de blocage (8), de sorte qu'un connecteur d'accouplement (7) accouplé peut être retiré et que du fait de l'enlèvement du connecteur d'accouplement (7) un mouvement de la douille de compression (4) est débloqué dans la seconde direction jusqu'à que la douille de compression applique en étanchant contre le poussoir (5) de vanne.

3. Élément d'accouplement (1) selon la revendication 1 ou 2, **caractérisé en ce qu'**est présent un corps de base (22) de manchon, que le corps de base (22) de manchon est relié au corps (12) de manchon, notamment qu'un moyen de rappel (23) de manchon est présent et que le moyen de rappel (23) de manchon agit entre le corps (12) de manchon et le boîtier (2) et/ou entre le corps de base (22) de manchon et le boîtier (2).

4. Élément d'accouplement (1) selon l'une des revendications 1 à 3, **caractérisé en ce qu'**au moins un piston (24) est présent, que le piston (24) entoure la douille de compression (4) et que le piston (24) en position de départ obture au moins en partie l'interface de jonction (26) de l'élément d'accouplement (1), de préférence que contre l'interface de jonction (26) est disposé un joint racleur (27), notamment que le joint racleur (27) applique au moins en position de départ contre le piston (24) ou que le joint racleur (27) applique au moins en position de départ contre le corps de base (22) de manchon.

5. Élément d'accouplement (1) selon les revendications 3 et 4, **caractérisé en ce qu'**observée en direction de l'axe d'accouplement (A), une douille d'appui (28) est disposée entre le corps de base (22) de manchon et le corps (12) de manchon, et que la douille d'appui (28) sert de palier à un ressort (29) de piston disposé entre le piston (24) et la douille d'appui (28).

6. Élément d'accouplement (1) selon l'une des revendications 1 à 5, **caractérisé en ce que** la douille de compression (4) présente un épaulement (30) de douille de compression, et **en ce qu'**entre l'épaulement (30) de douille de compression et le corps intérieur (3) de manchon est disposé un moyen de rappel (31), notamment que l'épaulement (30) de douille de compression est vissé sur la douille de compression (4).

7. Élément d'accouplement (1) selon l'une des revendications précédentes 1 à 6, **caractérisé en ce que** le poussoir de vanne (5) est maintenu au moyen d'un guidage (32) de poussoir à l'intérieur du corps intérieur (3) de manchon, notamment qu'il est bridé à l'intérieur au moyen d'une douille de serrage (33) vissée dedans.

8. Élément d'accouplement (1) selon l'une des revendications 1 à 7, **caractérisé en ce que** le poussoir (5) de vanne présente un joint (35) au niveau de sa tête (34) de poussoir de vanne, et que le joint (35) est maintenu au moins en partie par une douille de confinement (36) et que la douille de confinement (36) recouvre au moins en partie le joint (35).

9. Élément d'accouplement (1) selon la revendication 8, **caractérisé en ce que** le joint (35) présente une section en forme de T ou de croix, notamment que le joint (35) est maintenu entre une première gorge (37a) de logement dans la tête (34) de poussoir de vanne et une seconde gorge (37b) de logement de la douille de confinement (36).

10. Élément d'accouplement (1) selon l'une des revendications 1 à 9, **caractérisé en ce que** le corps (12) de manchon présente un segment (38) d'épaulement cylindrique, qu'un interstice (42) entre le boîtier (2) et le segment (38) d'épaulement est obturé de manière étanchéisante avec un moyen d'étanchéité lorsque l'élément d'accouplement (1) est découplé et accouplé, et que le corps de manchon (12) au moins pendant l'accouplement et le découplage est déplacé le long de l'axe d'accouplement (A) de sorte qu'une section d'écoulement est formée pour l'écoulement d'un fluide sous pression, notamment dans un espace annulaire (43).

11. Élément d'accouplement (1) selon la revendication 10, **caractérisé en ce que** le segment (38) d'épaulement présente au moins un élargissement local (39) du diamètre, que l'élargissement (39) du diamètre interagit avec au moins un joint (40) en étanchéisant lorsque l'élément d'accouplement (1) se trouve à l'état découplé et accouplé, et **en ce que** le corps (12) de manchon est déplacé le long de l'axe d'accouplement (A) au moins pendant l'accouplement et le découplage, de sorte qu'entre l'élargissement (39) de diamètre et le joint (40) est formé un interstice annulaire (42a, 42b) servant à évacuer le fluide sous pression, en particulier dans un espace annulaire (43).

12. Élément d'accouplement (1) selon l'une des revendications 1 à 11, **caractérisé en ce qu'**un moyen de blocage (44) est présent et que le moyen de blocage (44) permet de limiter un mouvement du corps intérieur (3) de manchon et/ou du corps (12) de manchon à l'intérieur du boîtier (2), et que la limitation empêche un accouplement de l'élément d'accouplement (1).

13. Élément d'accouplement (1) selon la revendication 12, **caractérisé en ce que** le moyen de blocage (44) permet de limiter un mouvement en fonction de la pression du fluide sous pression régnant dans l'élément d'accouplement (1), notamment qu'il est limité à partir d'une valeur-seuil prédéfinie de la pression.

14. Élément d'accouplement (1) selon l'une des revendications 1 à 13, **caractérisé en ce qu'**un moyen d'affichage (52) est présent et que le moyen d'affichage (52) permet d'afficher un état sous pression régnant à l'intérieur du boîtier (2), faisant qu'il est possible d'empêcher, par affichage interposé, un accouplement de l'élément d'accouplement (1) en présence d'états sous pression prédéfinis.
